# EUROPÄISCHE PATENTSCHRIFT

(11) **EP 4 225 611 B1**
(45) Veröffentlichungstag und Bekanntmachung des Hinweises auf die Patenterteilung: **29.04.2026**
(21) Anmeldenummer: 21777721.8
(22) Anmeldetag: 15.09.2021
(51) Int. Cl.: B60Q 1/00, B60Q 1/48, B60Q 1/50, B60Q 1/26, B60Q 1/52, B60R 25/104, B60Q 1/24, B60L 58/12, F21S 41/663, G08G 1/16, B60Q 9/00, B60L 1/00

(54) **KRAFTFAHRZEUG UND VERFAHREN ZUM BETRIEB EINER AUSLEUCHTEINRICHTUNG EINES KRAFTFAHRZEUGS**
VEHICLE AND METHOD FOR OPERATING A VEHICLE ILLUMINATING DEVICE
VÉHICULE ET PROCÉDÉ DE FONCTIONNEMENT D'UN DISPOSITIF D'ILLUMINATION DE VÉHICULE

(30) Priorität: 07.10.2020 DE 102020126251
(43) Veröffentlichungstag der Anmeldung: 16.08.2023
(73) Patentinhaber: Audi AG, 85045 Ingolstadt (DE)
(72) Erfinder: SCHMIDT, Valentin, 86633 Neuburg a.d. Donau (DE); FLACHHUBER, Michael, 92342 Freystadt (DE)
(74) Vertreter: Lindner Blaumeier Patent- und Rechtsanwälte
(86) Internationale Anmeldenummer: PCT/EP2021/075292
(87) Internationale Veröffentlichungsnummer: WO 2022/073733

(56) Entgegenhaltungen:
- EP-A1- 3 090 900
- EP-A2- 1 916 153
- WO-A1-2017/157651
- WO-A1-2018/103878
- DE-A1- 102012 219 572
- DE-A1- 102013 012 891
- DE-A1- 102015 214 682
- DE-A1- 102017 101 420
- DE-A1- 102018 124 896
- DE-A1- 102018 206 040
- DE-T5- 112014 006 870
- DE-T5- 112017 001 383
- US-A1- 2005 117 364

## Beschreibung

Die Erfindung betrifft ein Kraftfahrzeug, aufweisend eine mehrere Lichtquellen und eine Steuereinrichtung umfassende Ausleuchteinrichtung zum Ausleuchten eines in Umfangsrichtung die Umgebung des Kraftfahrzeugs vollständig abdeckenden, gleichzeitig ausleuchtbaren Ausleuchtbereichs, wobei der Ausleuchtbereich in mittels der Steuereinrichtung im Rahmen wenigstens einer, insbesondere assistierenden, Lichtfunktion eines Fahrzeugsystems unabhängig zur Ausleuchtung ansteuerbare Ausleuchtsegmente aufgeteilt ist. Daneben betrifft die Erfindung ein Verfahren zum Betrieb einer Ausleuchteinrichtung eines Kraftfahrzeugs.

Beleuchtungseinrichtungen für Kraftfahrzeuge, die einen gemäß insbesondere gesetzlicher Vorgaben zu erfüllenden Zweck für Kraftfahrzeuge erfüllen, sind bereits seit langem bekannt. Hierbei sind beispielsweise Scheinwerfer, Fahrtrichtungsanzeiger, Rückleuchten, Bremslichter und dergleichen zu nennen. In letzter Zeit wurden jedoch auch, beispielsweise im Rahmen assistierender Lichtfunktionen, Ausleuchtungseinrichtungen beliebter, die Bereiche unter und/oder nahe dem Kraftfahrzeug illuminieren sollen. Derartige Ausleuchteinrichtungen dienen häufig der Inszenierung des eigenen Kraftfahrzeugs, so dass sich die Funktionalität beispielsweise auf Blitzen, Pulsieren, Farbwechsel oder dauerhafte Ausleuchtung beschränkt. Als Lichtquellen können, insbesondere beim Einsatz zum Tuning eines Kraftfahrzeugs, beispielsweise Neonröhren und/oder LED-Bänder zum Einsatz kommen.

Im Stand der Technik wurden bereits einige Ansätze bekannt, ein derartiges "Nahbereichslicht" auch zur Umsetzung kommunizierender und/oder assistierender Lichtfunktionen einzusetzen. DE 10 2017 101 420 A1 betrifft ein lumineszierendes Fahrzeugformteil. Dabei wird eine Beleuchtungsvorrichtung offenbart, die sich entlang einer Umgrenzung einer Karosserieplatte teilweise um ein Kraftfahrzeug erstreckt. Die Beleuchtungsvorrichtung umfasst wenigstens eine Lichtquelle, wobei das Licht der Lichtquelle so projiziert wird, dass ein Bereich in der Nähe des Fahrzeugs beleuchtet wird. So kann ein Beleuchten eines Gebiets in der Nähe eines Fahrzeugs erfolgen und die Beleuchtung kann gesteuert werden, so dass eine verbesserte Beleuchtung für ein oder mehrere Kamera- oder Fahrerunterstützungssysteme des Fahrzeugs bereitgestellt wird.

DE 10 2018 206 040 A1 betrifft ein Verfahren zur Kommunikation eines Kraftfahrzeugs mit einem Verkehrsteilnehmer. Die Kommunikation erfolgt derart, dass der Verkehrsteilnehmer über ein geplantes Manöver des Kraftfahrzeugs oder eine bevorstehende Türöffnung beim Kraftfahrzeug informiert wird und/oder darüber, dass das Kraftfahrzeug den anderen Verkehrsteilnehmer erkannt hat. Bei dem Verfahren wird auf einer befahrbaren Fläche und/oder auf dem Kraftfahrzeug selbst wenigstens eine optisch sichtbare Erscheinung erzeugt. Die optisch sichtbare Erscheinung kann ein vollflächig ausgeleuchtetes Lichtsegment umfassen, wobei die optisch sichtbare Erscheinung auf wenigstens einer längs um das Kraftfahrzeug umlaufenden oder nahezu umlaufenden Anzeige- oder Lichterzeugungseinrichtung gebildet sein kann. Eine vergleichbare Offenbarung findet sich auch in DE 10 2018 206 042 A1, in welcher die optische sichtbare Erscheinung für einen beabsichtigten Wechsel des Kraftfahrzeugs von Fahrspuren beschrieben ist.

EP 1 916 153 A2 betrifft ein Verfahren zur Informationsdarstellung, bei welchem zumindest ein Projektionsobjekt an einer Projektionsstelle außerhalb eines Kraftfahrzeugs mittels an dem Kraftfahrzeug vorgesehener Projektionsmittel erzeugt wird. Durch zumindest ein erzeugtes Projektionsobjekt wird zumindest ein voraussichtlicher zukünftiger Aufenthaltsort des Kraftfahrzeugs, beispielsweise ein Parkplatz, zumindest flächig markiert.

WO 2017/157651 A1 und ihr Familienmitglied DE 11 2017 001 383 T5 betreffen ein Fahrzeuglicht-Führungssystem und ein Verfahren zur Führung eines Fahrzeugnutzers, der sich einem Fahrzeug nähert oder das Fahrzeug verlässt. Hierbei wird ein ausgeprägter erleuchteter Pfad auf den Boden projiziert, der sich zwischen dem Fahrzeug und einem Ort entfernt vom Fahrzeug erstreckt. Konkret entspricht der ausgeprägte erleuchtete Pfad einem tatsächlichen Pfad, den der Fahrzeugnutzer zurücklegt, wozu die Bewegung des Nutzers in der Umgebung des Fahrzeugs nachverfolgt werden kann. Hierbei kann ein Lichtsteuermodul verwendet werden, welches verschiedene Lichtquellen ansteuert, die räumlich unterschiedliche Regionen auf dem Boden um das Fahrzeug unabhängig ansteuerbar ausleuchten können. Die matrixartig angeordneten Regionen können sich in Umfangsrichtung und radialer Richtung um das Fahrzeug erstrecken.

DE 10 2018 124 896 A1 offenbart ein Verfahren zur vergrößerten Projektion für Fahrzeugpassagiere. Dieses beinhaltet das Erfassen, dass sich der Passagier innerhalb einer Drop Zone befindet, oder da-bei ist, in diese hineinzufahren, und das Erfassen eines oder mehrerer statischer Hindernisse innerhalb der Drop Zone. Mindestens eines der statischen Hindernisse über wird über einen Projektor, der an dem Fahrzeug montiert ist, hervorgehoben. Damit wird letztlich eine Nachrüstlösung geboten, die für auf der Beifahrerseite eines Taxis aussteigende Passagiere eine Verbesserung bereitstellt.

DE 11 2014 006 870 T5 betrifft eine Straßenoberflächenbeleuchtungseinrichtung für ein Fahrzeug. Diese umfasst einen Fahrzeugzustandsdetektor, der dazu ausgelegt ist, die Fahrtrichtung eines Fahrzeugs aufgrund der von einer Fahrzeuginformationserfassungseinheit erfassten Fahrzeuginformationen zu detektieren. Eine Beleuchtungsmusterauswählvorrichtung wählt ein Beleuchtungsmuster unter darin enthaltenen und für Fahrtrichtungen geeigneten Beleuchtungsmustern aus, das die vom Fahrzeugzustandsdetektor detektierte Fahrtrichtung ausdrückt. Eine Beleuchtungsvorrichtung wird veranlasst, zumindest eine Straßenoberfläche in einer von der Fahrtrichtung verschiedenen Richtung mit dem ausgewählten Beleuchtungsmuster zu beleuchten. So kann die Straßenoberflächenbeleuchtungseinrichtung eine Mitteilung über die Fahrtrichtung des Fahrzeugs an Personen außerhalb des Fahrzeugs, die in der von der Fahrtrichtung verschiedenen Richtung vorhanden sind, intuitiv bereitstellen. Die Beleuchtungsvorrichtung ist ein in das Fahrzeug eingebauter Laser, ein Beleuchtungsmuster ist eine graphische Darstellung, die deutlich die Richtcharakteristik der Fahrtrichtung abbildet, wie etwa eine Linie, ein Symbol oder Schriftzeichen, die einer allgemeinen Straßenverkehrsregel entsprechen.

Weiterer technischer Hintergrund ist in DE 20 2018 206 040 A1, EP 3 090 900 A1, DE 10 2017 101 420 A1, DE 10 2015 214 682 A1, DE 10 2013 012 891 A1, EP 1 916 153 A2, DE 10 2012 219 572 A1, US 2005/117364 A1 und WO 2017/157651 A1 beschrieben.

Der Erfindung liegt daher die Aufgabe zugrunde, ein demgegenüber insbesondere hinsichtlich der Nützlichkeit für assistierende Lichtfunktionen verbessertes Kraftfahrzeug anzugeben.

Zur Lösung dieser Aufgabe sind bei einem Kraftfahrzeug der eingangs genannten Art erfindungsgemäß die Merkmale des Anspruchs 1 vorgesehen. Das Kraftfahrzeug umfasst dass der Ausleuchtbereich der Ausleuchteinrichtung in einer Abstandsrichtung von dem Kraftfahrzeug wenigstens zwei aufeinander folgende Ausleuchtsegmente aufweist.

Dabei ist eine besonders vorteilhafte Ausgestaltung gegeben, wenn der Ausleuchtbereich, bevorzugt matrixartig, in in Umfangsrichtung und Abstandsrichtung aufeinander folgende Ausleuchtsegmente aufgeteilt ist, wobei insbesondere jedes Segment einen vordefinierten Umfangs- und Abstandsbereich abdecken kann. Nichts desto trotz ist auch, wie noch dargelegt werden wird, eine allein in Abstandsrichtung, also einer Richtung von dem Kraftfahrzeug weg, vorliegende Segmentierung einer den Nahbereich um das Kraftfahrzeug betreffenden Ausleuchteinrichtung vorteilhaft nutzbar, insbesondere für assistierende Lichtfunktionen eines Fahrzeugsystems. In diesem Zusammenhang sei noch allgemein angemerkt, dass die Steuereinrichtung auch wenigstens teilweise Teil des Fahrzeugsystems sein kann, wobei das Fahrzeugsystem selbstverständlich Teil des Kraftfahrzeugs ist.

Erfindungsgemäß wird mithin eine distanzabhängig segmentierte Ausleuchtung der fahrzeugnahen Umgebung vorgeschlagen, die die Umsetzung einer Reihe von assistierenden, kommunizierenden und/oder inszenierenden Lichtfunktionen ermöglicht. Dabei ergibt sich eine besonders hohe Flexibilität und Variationsvielfalt dadurch, dass von einer Ausleuchteinrichtung mit mehreren Lichtquellen ausgegangen wird, welche einen in Umfangsrichtung um das Kraftfahrzeug herum die fahrzeugnahe Umgebung des Kraftfahrzeugs vollständig abdeckenden, gleichzeitig ausleuchtbaren Ausleuchtbereich definieren, was beispielsweise im Gegensatz zu einem reinen, auf ein lokales Segment beschränkten Projektionsmittel steht. Die Ausleuchtsegmente können durch die Steuereinrichtung unabhängig angesteuert werden, das bedeutet, für jedes Ausleuchtsegment kann in der Steuereinrichtung einzeln entschieden werden, ob es in einer aktuellen Situation ausgeleuchtet werden soll oder nicht. Auf diese Weise lassen sich viele unterschiedliche Ausleuchtmuster erzeugen, um, wie beschrieben, unterschiedlichste assistierende Lichtfunktionen bereitzustellen, insbesondere solche, die von der Segmentierung in der Abstandsrichtung profitieren, wie im Folgenden noch genauer dargelegt werden wird. Dabei ist die Umfangsrichtung als jeweils die um das Kraftfahrzeug umlaufende Richtung zu verstehen, beispielsweise einer, insbesondere geglätteten, Einhüllenden der Außenform des Kraftfahrzeugs folgend. Die Abstandsrichtung kann beispielsweise zumindest im Wesentlichen senkrecht zu der Umfangsrichtung stehen und ist, wie die Umfangsrichtung, selbstverständlich jeweils lokal zu definieren. Dabei kann die Abstandsrichtung beispielsweise senkrecht auf der insbesondere geglätteten Einhüllenden des Kraftfahrzeugs stehen. Aufgrund lokaler, gewinkelt zueinander stehender Abstandsrichtungen können insbesondere auch winkelsegmentartige, insbesondere sich nach außen erweiternde, Segmente vorliegen, insbesondere bei einer matrixartigen, bevorzugten Aufteilung des Ausleuchtbereichs.

Die Realisierung der einzelnen, unabhängig ansteuerbaren Ausleuchtsegmente kann dabei mittels unterschiedlicher Technologien und Ansätze, wie sie im Stand der Technik grundsätzlich bekannt sind, erfolgen. Ausleuchtsegmente können jeweils durch die Anordnung wenigstens einer ihnen zugeordneten Lichtquelle und/oder die, insbesondere wenigstens teilweise steuerbare, Einstellung einer wenigstens einen dem Ausleuchtsegment zugeordneten Lichtquelle zugeordneten (oder zugehörigen) Optikkomponente definiert sein. In anderen Worten wird die Segmentierung des Ausleuchtbereichs durch die Anordnung der Lichtquellen und/oder die Einstellung wenigstens einer wenigstens einer der wenigstens einen Lichtquelle zugeordneten (oder zugehörigen) Optikkomponente und/oder die Ansteuerung der Lichtquellen und/oder der wenigstens ein Optikkomponente durch die Steuereinrichtung realisiert. Optickomponenten können beispielsweise Linsen, Blenden, insbesondere matrixartige Mikroblendenanordnungen, Lichtleiter und dergleichen umfassen. Einem Ausleuchtsegment können dabei auch mehrere Lichtquellen und/oder Optikkomponenten zugeordnet sein; umgekehrt ist es bei entsprechender Ansteuerung auch denkbar, eine einzelne Lichtquelle und/oder Optikkomponente mehreren Ausleuchtsegmenten zuzuordnen. Allgemein können Ausleuchtsegmente, insbesondere in Randbereichen, teilweise, aber nicht vollständig überlappen. Vorteilhaft, aber nicht zwingend notwendig, kann dabei sein, wenn Ausleuchtsegmente insbesondere entlang ihres Randes möglichst scharf definiert sind, beispielsweise nach Art einer Projektion scharf begrenzt sind. Dann können die Ausleuchtsegmente mit besonderem Vorteil unmittelbar aneinander angrenzen. Die wenigstens eine einem Ausleuchtsegment zugeordnete Lichtquelle und/oder die wenigstens eine zugeordnete (oder zugehörige) Optikkomponente können insbesondere einen Projektor zur Projektion einer definierten, insbesondere scharf begrenzten Lichtfläche auf den Untergrund der Umgebung des Kraftfahrzeugs bilden, wobei die Lichtfläche dann dem Ausleuchtsegment entspricht.

Dabei dient die Ausleuchteinrichtung besonders vorteilhaft der Ausleuchtung eines Nahbereichs der Umgebung um das Kraftfahrzeug herum und beginnt idealerweise möglichst nah an dem Kraftfahrzeug oder sogar unter dem Kraftfahrzeug. Konkret kann beispielsweise vorgesehen seien, dass der Ausleuchtbereich in der Abstandsrichtung eine Abstandsausdehnung von dem Kraftfahrzeug beginnend bei 0 bis 0,2 Metern und/oder endend bei 0,5 bis 3,5 Metern aufweist. Dabei ist es grundsätzlich denkbar, ein um das Kraftfahrzeug festes Abstandsintervall zu definieren, jedoch wird es aufgrund der gängigen Geometrien von Kraftfahrzeugen üblicher sein, wenn Startwert und Endwert des abgedeckten Abstandsintervalls in Umfangsrichtung lokal variieren, beispielsweise innerhalb der genannten Bereiche für den Startwert und/oder den Endwert. Wesentlich ist eine distanzabhängige Segmentierung der fahrzeugnahen Umlauffläche mit Funktionsbezug. Eine Reichweite von etwa 0 Zentimetern (oder weniger, das bedeutet, beginnend unter dem Kraftfahrzeug) bis zu 3 Metern rund um das eigene Kraftfahrzeug ist für die Abbildung der vieler nützlicher Lichtfunktionen ausreichend.

Dabei geht es bei der erfindungsgemäß vorgesehenen Ausleuchteinrichtung, wie bereits erwähnt, um die vollständig umlaufende Ausleuchtung des insbesondere unmittelbar an das Kraftfahrzeug angrenzenden, fahrzeugnahen Umfelds.

Daher unterscheidet sich die Ausleuchteinrichtung deutlich von weiteren Beleuchtungseinrichtungen des Kraftfahrzeugs. Diese kann das Kraftfahrzeug üblicherweise zusätzlich aufweisen, das bedeutet, das Kraftfahrzeug kann insbesondere zusätzlich zu der Ausleuchteinrichtung wenigstens eine Scheinwerfereinrichtung und/oder eine Fahrtrichtungsanzeigereinrichtung und/oder eine Heckleuchteneinrichtung und/oder ein Rückfahrlicht und/oder eine Bremslichteinrichtung und/oder eine Nummernschildbeleuchtung und/oder eine Positionslichteinrichtung aufweisen. Auch kann das Kraftfahrzeug zusätzlich Innenraumbeleuchtungseinrichtungen zur Beleuchtung eines Innenraums des Kraftfahrzeugs umfassen.

Zusammenfassend ist also eine distanzabhängige Segmentierung des Ausleuchtbereichs, mithin in Abstandsrichtung, gegeben, die verschiedenartige neue assistierende und/oder kommunizierende Lichtfunktionen erlaubt, beispielsweise hinsichtlich der abstandsbezogenen Verstärkung von Intensitäten, der dynamischen Hervorhebung von Richtungen oder der lokalen Ausleuchtung von Objekten. Insbesondere zusätzlich zu einer Segmentierung in Umfangsrichtung wird die örtliche Auflösung zusätzlich verfeinert. Denn die Segmentierung in Umfangsrichtung, die auch als winkelabhängige Segmentierung bezeichnet werden kann, ermöglicht beispielsweise die gezielte Hervorhebung von Objekten, die Adressierung von Objekten in bestimmten Richtungen oder die flexiblere dynamische Ansteuerung von Inszenierungen.

Allgemein gesagt können die Anzahl und die konkrete Ausprägung der Ausleuchtsegmente individuell auf die Funktionsanforderungen der jeweiligen Lichtfunktionen ausgelegt werden. Dies bezüglich reicht die Spanne von in Abstandsrichtung aufeinander folgenden Lichtringen um das Kraftfahrzeug bis hin zu einem hoch auflösenden, insbesondere einzelne Pixel als Ausleuchtsegmente definierenden Projektionsfeld in einem Teil des Ausleuchtbereichs oder sogar dem gesamten Ausleuchtbereich.

Durch die Kopplung mit den assistierenden und/oder kommunizierenden Lichtfunktionen des wenigstens ein Fahrzeugsystems wird letztlich eine Ambientebeleuchtung genutzt, um eine visuell ansprechende Umsetzung der wenigstens einen insbesondere assistierenden und/oder kommunizierenden Lichtfunktion bereitzustellen.

Denkbare Lichtfunktionen werden im Folgenden noch genauer beschrieben und umfassen beispielsweise eine umweltsensitive, adaptive Intensitätsvariation, ein Annäherungslicht, eine Coming Home-Funktion, eine Diebstahlwarnung, eine Distanzempfehlung bezüglich eines anderen Verkehrsteilnehmers, ein Erinnerungslicht, eine animierte oder statische Fahrtrichtungsanzeige, eine Umfeldbeleuchtung bei einer Folgefahrt, eine Hervorhebung von Gefahrenstellen, diverse Hinweise auch zur Kommunikation mit anderen Verkehrsteilnehmern, insbesondere zur Mitteilung, dass Fußgänger erkannt wurden und/oder das Kraftfahrzeug losfahren wird, eine Ladeabschlussanzeige, eine Ladestartanzeige, eine Ladestellenbeleuchtung, eine Ladezustandsanzeige, eine Leaving Home-Funktion, ein Notlicht, eine Anzeige eines Panik-Modus, ein Pfützenlicht, ein Rangierlicht, einen seitlichen Abstandshinweis, ein Rückfahrlicht, einen Spurzusammenführungsassistenten, ein synthetisches Kurvenlicht, insbesondere bezogen auf das Rückwärtsfahren, eine Trajektorienprojektion, eine Unterstützung einer nicht vollständigen Straßenbeleuchtung, ein Vorfahrtslicht, einen animierten Warnblinker, ein Türöffnungslicht und der Situation angepasste Kennzeichnungen des Kraftfahrzeugs als Hindernis (Standlicht bzw. Parklicht).

Die Lichtquellen können wenigstens ein LED und/oder wenigstens eine Laserlichtquelle und/oder wenigstens einen Projektor umfassen. Zu einem Projektor als Lichtquelle kann hierbei auch wenigstens eine Optikkomponente gehören. Bevorzugt können die Lichtquellen wenigstens teilweise in wenigstens einem Schweller und/oder einer Frontschürze und/oder einer Heckschürze und/oder einem Unterboden und/oder wenigstens einem Stoßfänger und/oder in wenigstens einem Radkasten und/oder in einem Spoiler und/oder in einem Kühlergrill verbaut sein. Dabei ist die Integration in Unterboden, Schweller, Radkasten, Spoiler und/oder Front- und Heckschürze erfindungsgemäß besonders bevorzugt. Auf diese Weise wird ein auch allgemein bevorzugter, bodennaher Verbau der Lichtquellen im Kraftfahrzeug ermöglicht, durch welchen besonders vorteilhaft ein Beginn des Ausleuchtbereichs wenigstens teilweise möglichsten nah am und/oder sogar unter dem Kraftfahrzeug realisierbar ist, mithin der unmittelbare Nahbereich um das Kraftfahrzeug möglichst vollständig ausgeleuchtet werden kann. Grundsätzlich ist auch ein anderer bodennaher Verbau der Lichtquellen im Kraftfahrzeug denkbar, bevorzugt sollte jedoch allgemein eine Anordnung der Lichtquellen im unteren Drittel des Kraftfahrzeugs, insbesondere in den unterem 20% des Kraftfahrzeugs, angestrebt werden. Weitere denkbare Verbauorte für die Lichtquellen, die zwar höher angeordnet sind, sich dennoch aber als vorteilhaft für eine Ausleuchtung des Nahbereichs um das Kraftfahrzeug erwiesen haben, sind ebenso denkbar. So kann auch vorgesehen sein, dass wenigstens ein Teil der Lichtquellen in wenigstens einem Außenspiegel des Kraftfahrzeugs und/oder in einer Heccklappe des Kraftfahrzeugs und/oder wenigstens einer A-Säule und/oder einer wenigstens einer B-Säule und/oder wenigstens einer C-Säule und/oder wenigstens einer Tür des Kraftfahrzeugs verbaut sind.

Mit besonderem Vorteil kann die Ausleuchteinrichtung zur Ausleuchtung wenigstens eines Teils der Ausleuchtsegmente in unterschiedlichen Lichtintensitäten und/oder Lichtfarben ausgebildet sein. Insbesondere sind also die Lichtquellen und/oder die Optikkomponenten ausgebildet, steuerbar unterschiedliche Lichtintensitäten (Helligkeiten) und/oder Lichtfarben für wenigstens den Teil der Ausleuchtsegmente bereitzustellen, wobei die Steuereinrichtung zur unabhängigen Ansteuerung dieser Ausleuchtsegmente bezüglich der Lichtintensität und/oder Lichtfarbe ausgebildet sind. Auf diese Weise wird eine weitere Vielfalt von Expressionsmöglichkeiten durch die Ausleuchteinrichtung hinzugefügt, welche nochmals eine deutlich weitergehendere Flexibilität und Variationsmöglichkeit bereitstellt, da unterschiedliche Ausleuchtsegmente mit unterschiedlichen, bevorzugt stufenlos dimmbaren, Helligkeiten und/oder Lichtfarben ausgeleuchtet werden können. Neben der bevorzugten stufenlosen Dimmbarkeit der Ausleuchtsegmente, beispielsweise über eine pulsweitenmodulierte Ansteuerung der Lichtquelle, kann selbstverständlich auch eine Verwendung fest vorgegebener, gestufter Lichtintensitäten im Betracht gezogen werden. Zur Realisierung unterschiedlicher Lichtfarben lassen sich neben entsprechend geeigneten Optikkomponenten, beispielsweise Farbfiltern, mit besonderem Vorteil auch LED-Anordnungen verwenden, die beispielsweise jeweils eine Leuchtdiode für grünes Licht, für rotes Licht und für blaues Licht enthalten können, sodass durch entsprechende Ansteuerung unterschiedliche Lichtfarben erhalten werden können.

Die Steuereinrichtung ist, allgemein gesagt, in Abhängigkeit einer Anforderung der, insbesondere assistierenden und/oder kommunizierenden, Lichtfunktion zur segmentbezogenen Ansteuerung der Ausleuchteinrichtung zur Umsetzung der Lichtfunktion ausgebildet. Konkret können beispielsweise Eingangsinformationen der Lichtfunktion zur Ermittlung einer Ausleuchtungsinformation ausgewertet werden, wobei die Steuereinrichtung zur Ansteuerung der Ausleuchteinrichtung, insbesondere also deren Lichtquellen sowie gegebenenfalls Optikkomponenten, gemäß der Ausleuchtungsinformation, beispielsweise mittels einer aus der Ausleuchtungsinformation abgeleiteten Ansteuerinformation ausgebildet ist. Hierzu kann die Steuereinrichtung in konkreter Ausbildung eine Auswertungseinheit zur Ermittlung der Ausleuchtungsinformation und eine Ansteuereinheit zur Ansteuerung der Ausleuchteinrichtung gemäß der Ausleuchtungsinformation aufweisen. Diese können durch Hardware-und/oder Softwarekomponenten entsprechend umgesetzt werden, wobei die Hardwarekomponenten der Steuereinrichtung beispielsweise wenigstens einen Prozessor und/oder wenigstens ein Speichermittel, in dem auch Softwarekomponenten gespeichert werden können, umfassen können. Insbesondere können die Auswertungseinheit und die Ansteuereinheit wenigstens teilweise eine Lichtalgorithmik bildend umgesetzt werden, welche die Funktionslogik der Teilfunktionen verantwortet, erforderliche Schnittstelleninformationen, insbesondere als Eingangsinformationen, einliest und letztendlich die erforderliche Ansteuerung der Lichtquellen sowie gegebenenfalls Optikkomponenten signalisiert. Die Schnittstellen der wenigstens eine Lichtfunktion realisierenden Lichtalgorithmik zu weiteren Software- und/oder Hardwaremodulen des Kraftfahrzeugs können lichtfunktionsabhängig sein und/oder bei Bedarf erweitert werden. Eingangsinformationen zur Ermittlung der Ausleuchtungsinformation, insbesondere also für die Auswertungseinheit, können mit besonderem Vorteil Sensordaten wenigstens eines Umfeldsensors des Kraftfahrzeugs umfassen, sodass letztlich durch die Lichtfunktion auf konkrete physikalisch-technische Gegebenheiten im Umfeld des Kraftfahrzeugs, insbesondere im Ausleuchtungsbereich, reagiert werden kann bzw. die aktuelle Fahrsituation bzw. allgemein Betriebssituation in der Lichtfunktion berücksichtigt werden kann. Umfeldsensoren können beispielsweise Kameras, Radarsensoren, Lidarsensoren, Ultraschallsensoren und dergleichen umfassen. Andere nützliche Eingangsdaten betreffen den aktuellen Betriebszustand des eigenen Kraftfahrzeugs beschreibende Egodaten, wobei auch darüber hinaus für verschiedene Lichtfunktionen Eingangsinformationen denkbar sind, die über diese reine Beschreibung der aktuellen Betriebssituation des Kraftfahrzeugs durch Sensordaten und/oder Betriebsdaten (Egodaten) hinaus gehen, beispielsweise einen Fahrerwunsch beschreibende Personalisierungsinformationen. Derartige Personalisierungsinformationen können auch der Ermittlung der Ausleuchtungsinformation nachgeschaltet bei der Ansteuerung, beispielsweise bei der Ermittlung einer Ansteuerinformation, berücksichtigt werden.

Mögliche Eingangsinformationen für die wenigstens eine Lichtfunktion können beispielsweis eine aktuelle Geschwindigkeit des Kraftfahrzeugs, einen Klemmenzustand, Objektinformationen zu Umfeldobjekten (Existenz, Klasse, Position, ...), prädiktive Streckendaten, prädizierte oder geplante Fahrmanöver, die Umgebungshelligkeit, die Regenmenge, die Stellung eines Lichttastmoduls, den Betriebszustand einer Ladeeinrichtung für eine elektrische Hochspannungsbatterie des Kraftfahrzeugs, Informationen zu aktuell drohenden Gefahren, den Betriebszustand von Türen des Kraftfahrzeugs, Sitzbelegungsinformationen, Fahrtrichtungsanzeigeinformationen, Parklichtinformationen, Information einer Diebstahlwarnanlage, Informationen eines eingebauten Notrufsystems, Panikmodusinformationen, ein aktives Fahrprofil, ein aktives Nutzerprofil, die Stellung eines Gangwahlhebels und/oder den Lenkwinkel umfassen.

Die Steuereinrichtung kann über wenigstens ein Bussystem des Kraftfahrzeugs mit mehreren anzusteuernden Komponenten der Ausleuchteinrichtung verbunden sein, insbesondere mit den Lichtquellen und/oder wenigstens einer ansteuerbaren Optikkomponente und/oder wenigstens eine Lichtquelle und/oder wenigstens eine ansteuerbare Optikkomponente umfassenden Ausleuchtmodulen. Dabei kann beispielsweise für jedes Ausleuchtsegment ein Ausleuchtmodul vorgesehen sein, welches sodann entsprechend unabhängig ansteuerbar ist. Die Ansteuerung der Lichtquellen und/oder Optikkomponenten und/oder Ausleuchtmodule erfolgt dann zweckmäßig über fahrzeugeigene Bussysteme, beispielsweise einen LIN-Bus, einen CAN-Bus, einen CAN-FD-Bus und/oder ein fahrzeuginternes Ethernet.

Die Steuereinrichtung ist im Rahmen der Lichtfunktion erfindungsgemäß zur, insbesondere dynamischen, Anzeige einer insbesondere von dem Kraftfahrzeug weg oder zu dem Kraftfahrzeug hin gerichteten Umgebungsrichtung durch unterschiedliche Ansteuerung von wenigstens zwei in Abstandsrichtung zueinander versetzten Ausleuchtsegmenten ausgebildet. Mit besonderem Vorteil kann die Steuereinrichtung im Rahmen der Lichtfunktion zum abstandsbezogenen Anleuchten und/oder Hervorheben eines Umgebungsobjekts und/oder zur Anzeige einer durch ausgeleuchtete Intervalle des Ausleuchtbereichs in Abstandsrichtung anzuzeigenden Zusatzinformation ausgebildet ist. Mithin ermöglicht die Segmentierung in der Abstandsrichtung zum einen das Hervorheben und/oder Anleuchten von Umgebungsobjekten, beispielsweise durch Auswahl eines bestimmten auszuleuchtenden Abstandsbereichs in Abstandsrichtung, der das Umgebungsobjekt umfasst und/oder diesem unmittelbar benachbart ist. Selbstverständlich bietet sich beim Ausleuchten und/oder Hervorgeben von Umgebungsobjekten eine Kombination mit einer Segmentierung in Umfangsrichtung besonders an, insbesondere eine matrixartige Segmentierung in Abstandsrichtung und Umfangsrichtung. Der Begriff des Umgebungsobjekts ist im Rahmen der vorliegenden Erfindung breit zu verstehen, insbesondere als ein allgemein eine Position und/oder Ausdehnung in einem Umgebungsmodell des Kraftfahrzeugs aufweisendes Umgebungsobjekt, welches sowohl ein physikalisch tatsächlich vorhandenes Umgebungsobjekt sein kann als auch ein virtuelles Umgebungsobjekt, beispielsweise ein ausgezeichneter, definierter Umgebungsbereich, insbesondere ein Flächenabschnitt. Die Segmentierung in Abstandsrichtung erlaubt jedoch auch ein deutlich verbessertes Darstellen von Umgebungsrichtungen ausgehend vom Kraftfahrzeug, wobei erfindungsgemäß unterschiedliche Lichtintensitäten und/oder Lichtfarben in Abstandsrichtung aufeinander folgen und/oder sogar eine zeitliche Dynamik verwendet wird, nämlich nach der Art eines Lauflichts von innen nach außen oder außen nach innen, sodass insbesondere auch bei einer nicht vorgesehenen Segmentierung in Umfangsrichtung eine Richtung zum Fahrzeug hin und eine Richtung vom Fahrzeug weg als Umgebungsrichtungen visualisiert werden könnte. Vorgesehen ist aber auch hier eine Kombination mit einer Segmentierung in Umfangsrichtung.

Schließlich kann die Segmentierung in Abstandsrichtung und vorteilhafterweise auch in Umfangsrichtung auch zur Ausgabe einer Zusatzinformation, insbesondere eine Kommunikationsinformation, genutzt werden. Auch hierbei ist es prinzipiell schon ausreichend, beispielsweise in der Form von Lichtringen um das Kraftfahrzeug lediglich eine Segmentierung in Abstandsrichtung vorzusehen, da dann beispielsweise ein Parameter als Zusatzinformation durch eine entsprechende Anzahl ausgeleuchteter, mithin zugeschalteter Ausleuchtsegmente, insbesondere ausgehend von Kraftfahrzeug selbst, angezeigt werden kann. Selbstverständlich sind auch, insbesondere bei einer matrixartigen Segmentierung in Umfangsrichtung und Abstandsrichtung, komplexe Zusatzinformationen denkbar, bis hin zu Texten, Symbolen und dergleichen. Auch hierbei erweist sich die Segmentierung in Abstandsrichtung als besonders vorteilhaft.

Neben dem Kraftfahrzeug betrifft die vorliegende Erfindung auch ein Verfahren zum Betrieb einer Ausleuchteinrichtung eines Kraftfahrzeugs gemäß der vorliegenden Erfindung im Rahmen der Lichtfunktion des Fahrzeugsystems mit den Merkmalen des Anspruchs 5. Das Verfahren umfasst folgende Schritte:
- Auswertung einer, insbesondere Sensordaten wenigstens eines Umfeldsensors des Kraftfahrzeugs umfassenden, Eingangsinformation der Lichtfunktion zur Ermittlung einer Ausleuchtungsinformation, die wenigstens eine anzuzeigende Umgebungsrichtung beschreibt,
- Ansteuerung der Ausleuchteinrichtung gemäß der Ausleuchtungsinformation zum Anleuchten und/oder Hervorheben des wenigstens einen Umgebungsobjekts und/oder zum Anzeigen der wenigstens einen Umgebungsrichtung und/oder zur Anzeige der Zusatzinformation.

Sämtliche Ausführungen zum erfindungsgemäßen Kraftfahrzeug lassen sich analog auf das erfindungsgemäße Verfahren übertragen, sodass auch mit diesem die bereits genannten Vorteile erhalten werden können. Die Ausleuchtungsinformation kann ferner wenigstens ein anzuleuchtendes und/oder hervorzuhebendes Umgebungsobjekt und/oder eine durch ausgeleuchtete Intervalle des Ausleuchtbereichs in Abstandsrichtung anzuzeigende Zusatzinformation beschreibend ermittelt werden. Entsprechend kann die Ausleuchteinrichtung gemäß der Ausleuchtungsinformation ferner zum Anleuchten und/oder Hervorheben des wenigstens einen Umgebungsobjekts zur Anzeige der Zusatzinformation angesteuert werden.

Wie bereits erläutert, ist der Begriff des Umgebungsobjekts dabei breit und abstrakt zu verstehen, insbesondere auch als ein ausgezeichneter Umgebungsbereich, wobei das Umgebungsobjekt jedoch auch ein physikalisch vorhandenes, gegenständliches Umgebungsobjekt sein kann. Auch eine Umgebungsrichtung kann vorzugsweise eine durch eine Gerade definierte Richtung, insbesondere in der Horizontalen, sein, denkbar sind jedoch auch breiter bzw. allgemeiner definierte Richtungen wie "vom Kraftfahrzeug weg" oder "zum Kraftfahrzeug hin".

Konkret kann vorgesehen sein, dass zur Ansteuerung gemäß der Ausleuchtungsinformation eine ein räumliches und/oder zeitliches Ausleuchtmuster beschreibende Ansteuerinformation ermittelt wird. Eine derartige Ansteuerinformation kann beispielsweise beschreiben, welches Ausleuchtsegment des Ausleuchtbereiches wie betrieben werden soll, insbesondere ob es ausgeleuchtet werden soll oder nicht und/oder mit welcher Lichtintensität und/oder welche Lichtfarbe es ausgeleuchtet werden soll. Dabei sind auch zeitlich dynamische Verläufe der jeweiligen Ausleuchtparameter eines Ausleuchtmusters denkbar, beispielsweise Lichtintensitätsverläufe, Lichtfarbverläufe und/oder definierte Zeiträume, in denen ein Ausleuchtsegment ausgeleuchtet werden soll bzw. nicht ausgeleuchtet werden soll, nachdem sich gezeigt hat, dass durch eine solche zeitlich dynamische Ausleuchtung der Umgebung des Kraftfahrzeugs Informationen und Hilfestellungen besonderes nachhaltig und einprägsam sowie intuitiv vermittelt werden können. Mithin ist es in diesem Kontext besonders vorteilhaft, wenn das Ausleuchtmuster räumlich und/oder zeitlich variierende Lichtintensitäten und/oder Lichtfarben umfasst.

Das Ausleuchtmuster kann in vorteilhaften Weiterbildungen wenigstens teilweise aus einer Datenbank vordefinierter Ausleuchtmuster, insbesondere in Abhängigkeit von der Ausleuchtungsinformation, abgerufen werden. Mithin können bestimmten Ausleuchtungsinformationen zugeordnete Ausleuchtmuster, die gegebenenfalls wenigstens teilweise noch weiter parametrierbar sind, insbesondere anhand der Ausleuchtungsinformation selbst, in einer Datenbank bereits vorgespeichert vorliegen und entsprechend bei vorliegender entsprechender Ausleuchtungsinformation aus dieser abgerufen werden, um hierauf basierend die Ansteuerinformation zu ermitteln. Auf diese Weise müssen Ausleuchtmuster nicht zwangsläufig, insbesondere vollständig, aus der Ausleuchtinformation neu ermittelt werden, sondern können wenigstens teilweise bereits vorberechnet und vorgegeben sein.

In einer besonders zweckmäßigen Weiterbildung der vorliegenden Erfindung kann vorgesehen sein, dass das Ausleuchtmuster wenigstens teilweise basierend auf einer von einem Benutzer bereitgestellten Personalisierungsinformation ermittelt wird. Das bedeutet, dem Benutzer, beispielsweise einem Fahrer des Kraftfahrzeugs, kann die Möglichkeit bereitgestellt werden, Lichtfunktionen zu personalisieren, beispielsweise, indem bestimmte Muster, Farben, Lichtintensitäten und dergleichen für bestimmte Umstände, beispielsweise Lichtfunktionen und/oder Ausleuchtinformationen, bereitgestellt werden können. Dies ist beispielsweise besonders nützlich im Hinblick auf Lichtfunktionen wie eine "Coming Home"-Funktion und/oder eine "Leaving Home"-Funktion, bei der bei Annäherung an das Kraftfahrzeug und/oder Entfernung von dem Kraftfahrzeug eine assistierende Lichtunterstützung gegeben werden soll, welche dann sozusagen personalisiert gewählt werden kann.

Zum Anleuchten und/oder Hervorheben des wenigstens einen Umgebungsobjekts kann vorgesehen sein, dass dieses enthaltende Ausleuchtsegmente heller und/oder in einer anderen Lichtfarbe als eine Objektumgebung des Umgebungsobjekts ausgeleuchtet werden. Selbstverständlich sind hier auch anderweitige Ansätze denkbar, beispielsweise derart, dass dann, wenn die anderen Ausleuchtsegmente gerade ohnehin nicht betrieben werden, lediglich die das Umgebungsobjekt enthaltenden und/oder dieses umgebenden Ausleuchtsegmente überhaupt betrieben werden. Ein Hervorheben eines Umgebungsobjekts kann grundsätzlich auch dahingehend denkbar sein, dass genau das Umgebungsobjekt enthaltende Ausleuchtsegmente nicht ausgeleuchtet werden.

Zum Anzeigen der wenigstens ein Umgebungsrichtung ist erfindungsgemäß vorgesehen, dass in der Umgebungsrichtung aufeinander folgende Ausleuchtsegmente untereinander unterschiedlich und/oder in einer zeitlich dynamischen Abfolge ausgeleuchtet werden. Zusätzlich kann vorgesehen sein, dass in der Umgebungsrichtung aufeinander folgende Ausleuchtsegmente von in Umfangsrichtung und/oder Abstandsrichtung benachbarten Ausleuchtsegmenten unterschiedlich ausgeleuchtet werden. Beispielsweise können also in der Umgebungsrichtung aufeinander folgende Segmente aufgrund der Ausleuchtungsinformation aufgefunden und entsprechend unterschiedlich zu umgebenden Ausleuchtsegmenten bzw. zeitlich, insbesondere untereinander, veränderlich betrieben werden. Auf diese Weise entsteht eine besonders intuitive Vermittlung von Richtungen an einen Insassen des Kraftfahrzeugs, beispielsweise ein Fahrer, und/oder eine in der Umgebung des Kraftfahrzeugs befindliche Person.

In konkreten Ausgestaltungen der vorliegenden Erfindung kann beispielsweise vorgesehen sein, dass als Umgebungsobjekt eine Pfütze und/oder ein Zweiradfahrer, wobei insbesondere zusätzlich eine Distanzempfehlung als Zusatzinformation angezeigt wird, und/oder eine Gefahrenstelle und/oder ein Fußgänger und/oder eine Aufladeeinrichtung für einen Energiespeicher und/oder Tank des Kraftfahrzeugs und/oder ein einen freizuhaltenden Seitenabstand kennzeichnender Freihaltebereich und/oder eine von einem Straßenlicht unterhalb eines Helligkeitsschwellwerts ausgeleuchtete Dunkelstelle und/oder ein zwischen dem eigenen Kraftfahrzeug und einem unmittelbar vorausfahrenden und/oder nachfolgenden Kraftfahrzeug, insbesondere bei einer Folgefahrt, befindlicher Umgebungsbereich und/oder ein Hindernis und/oder ein zwischen dem Hindernis und dem Kraftfahrzeug liegender Umgebungsbereich, insbesondere bei einem Einpark- und/oder Rangiervorgang, verwendet werden.

In einem konkreten Beispiel kann in einer Annäherungslichtfunktion, welche beispielsweise bei einem Rangier- und/oder Parkvorgang eingesetzt werden kann, der Bereich zwischen einem Hindernis und dem Kraftfahrzeug durch Ausleuchtsegmente der Ausleuchteinrichtung stärker ausgeleuchtet werden, um dem Fahrer hier zu assistieren. In diesem Kontext ist auch eine allgemeine Park bzw. Rangierlichtfunktion denkbar, die insgesamt die Hindernisse selbst als Umgebungsobjekte hervorhebt und/oder anleuchtet. Dies gilt selbstverständlich analog für andere Gefahrenstellen und/oder andere Verkehrsteilnehmer.

In einem weiteren Beispiel ist auch eine Distanzlichtfunktion denkbar, mittels welcher eine Distanzempfehlung zu einem anderen Verkehrsteilnehmer, insbesondere einem Zweiradfahrer wie einem Fahrradfahrer und/oder einem Motorroller, angezeigt werden kann. In einer derartigen Ausgestaltung wird, beispielsweise bei einem Überholvorgang eines Zweiradfahrers, mithin nicht nur der Zweiradfahrer selbst angeleuchtet bzw. hervorgehoben, um für den Fahrer des Kraftfahrzeugs gut erkennbar zu sein, sondern es kann auch mittels der Ausleuchteinrichtung eine Zusatzinformation ausgegeben werden, die anzeigt, welches der empfohlene Abstand zu dem Zweiradfahrer ist, beispielsweise als in einer anderen Lichtfarbe hervorgehobener Abstandsbereich und/oder durch eine Symbolik bei hinreichend hoher räumlicher Auflösung durch die Ausleuchtsegmente. Mit besonderem Vorteil kann um die Position von vorausfahrenden Zweirädern, insbesondere Fahrrädern und/oder Motorrollern, die Distanzempfehlung mittels der Ausleuchteinrichtung visualisiert werden, um ein gefahrloses Überholen zu ermöglichen, was insbesondere innerstädtisch und/oder auf Landstraßen zweckmäßig ist. Dies kann auch gleichzeitig der Hervorhebung des entsprechenden Umgebungsobjekts dienen kann, da die Distanzempfehlung diesen ja zumindest teilweise umschließt. In einer anderen Ausprägung einer solchen Distanzempfehlungsfunktion kann auch vorgesehen sein, dass, wie bereits angedeutet, beim Überholvorgang über die Ausleuchteinrichtung ein Mindestabstand dargestellt wird, beispielsweise als in Richtung des Zweiradfahrers hervorstehender Ausleuchtbereich, um die fahrzeugeigenen Insassen und den Zweiradfahrer vor Risiken zu schützen.

In einem weiteren Beispiel ist auch eine Folgefahrt-Lichtfunktion mittels der Ausleuchteinrichtung denkbar. Beispielsweise kann es bei einer Folgefahrt zweckmäßig sein, die Reichweite der konventionellen Ausleuchtung, beispielsweise durch Scheinwerfer, zu reduzieren und/oder sogar gänzlich auszuschalten, und die Ausleuchtung durch die Ausleuchteinrichtung hinzu- bzw. einzuschalten. Auf diese Weise kann eine verbesserte Sensibilisierung auf die eigene Position bei gleichzeitiger Energieeinsparung erreicht werden.

Ein weiteres Beispiel für eine Lichtfunktion kann auch als "Gefahrenspot" bezeichnet werden. Wird ein Gefahrenpotenzial, beispielsweise ein nicht überfahrbares Hindernis, insbesondere anhand der Sensordaten erkannt, so erfolgt eine Hervorhebung des entsprechenden Umfeldobjektes an seiner Position, sodass es dem Fahrer unmittelbar bewusst wird.

Ferner ist auch eine Ausprägung der Lichtfunktion als Pfützenlicht denkbar. Beispielsweise können, um Pfützen in unmittelbarer Nähe des Kraftfahrzeugs beim Aussteigen durch Insassen besser erkennbar zu machen, diese durch die Pfütze als Umgebungsobjekt umfassende Ausleuchtsegmente der Umfeldbeleuchtung hervorgehoben werden. Dies kann als eine Erweiterung oder gegebenenfalls sogar als ein Ersatz für eine Türleuchte gesehen werden.

In einem besonders vorteilhaften Beispiel kann das Kraftfahrzeug auch zur Unterstützung bzw. Ergänzung der Straßenbeleuchtung eingesetzt werden. Hierzu kann vorgesehen sein, dass als Umgebungsobjekte nicht hinreichend durch die Straßenbeleuchtung ausgeleuchtete Dunkelstellen im Ausleuchtbereich detektiert werden und die Ausleuchteinrichtung entsprechend angesteuert wird, um diese Bereiche zusätzlich zu erhellen. Das Kraftfahrzeug kann mithin, beispielsweise im geparkten bzw. abgestellten Zustand, aber auch im Stadtverkehr, als Teil der Straßenbeleuchtung fungieren und leuchtet mittels der Ausleuchteinrichtung fahrzeugnahe, zu dunkle Umgebungsbereiche, also Dunkelstellen, zusätzlich aus. Ist diese Unterstützungsfunktion aktiv, kennzeichnet sie zudem das eigene Kraftfahrzeug im geparkten Zustand als potenzielles Hindernis (Stand- bzw. Parklicht/Hindernisbeleuchtung).

Es können auch mit dem Kraftfahrzeug bewegte Umgebungsbereiche als Umgebungsobjekt definiert werden, beispielsweise solche, die einen gewollten Seitenabstand vom eigenen Kraftfahrzeug anzeigen. Dieser ist nicht nur eine nützliche Information für ein Fahrer des eigenen Kraftfahrzeugs, sondern auch für andere Verkehrsteilnehmer, die sich an der Ausleuchtung eines derartigen Umgebungsbereichs orientieren können, insbesondere wählen, in diesen nicht hineinzufahren.

Doch auch aufzufindende Objekte können mittels der Ausleuchteinrichtung hervorgehoben werden, beispielsweise Ladesäulen, Tanksäulen oder sonstige Aufladeeinrichtungen, um diese für den Fahrer besser erkennbar und somit nutzbar zu machen.

Hinsichtlich der Umgebungsrichtung sieht eine vorteilhafte Ausgestaltung der vorliegenden Erfindung vor, dass als die Umgebungsrichtung eine Annäherungsrichtung eines dynamischen Umgebungsobjekts und/oder eine aktuelle Fahrrichtung des eigenen Kraftfahrzeugs und/oder eine zusätzlich zu einem Fahrtrichtungsanzeiger an dem Kraftfahrzeug anzuzeigende, durch ein Fahrtrichtungsanzeigesignal beschriebene Fahrtrichtungsanzeigerrichtung und/oder eine insbesondere von einem Navigationssystem und/oder einem Fahrerassistenzsystem gelieferte Sollbewegungsrichtung und/oder eine Richtung zu einem außerhalb des Ausleuchtbereichs befindlichen Umgebungsobjekt verwendet wird.

Zur besseren Einschätzung der Verkehrssituation durch den Fahrer ist es mithin beispielsweise denkbar, Fahrtrichtungen anderer Verkehrsteilnehmer und/oder des eigenen Kraftfahrzeug als Umgebungsrichtungen wiederzugeben. Insbesondere können sich Umgebungsrichtungen auch auf außerhalb des Ausleuchtbereichs der Ausleuchteinrichtung liegende Umfeldobjekte, beispielsweise Hindernisse und/oder andere Verkehrsteilnehmer, beziehen, um deren Präsenz anzuzeigen und gleichzeitig einen Hinweis auf deren Position auszugeben.

Besonders nützlich ist es auch, im Rahmen wenigstens einer Lichtfunktion, beispielsweise in einer Navigationslichtfunktion, Sollrichtungen anzuzeigen. Dabei muss es sich nicht zwangsläufig um Sollbewegungsrichtungen des Kraftfahrzeugs handeln, um ein Navigationsziel zu erreichen, sondern es kann auch mit besonderem Vorteil angezeigt werden, in welcher Richtung ein durch das Kraftfahrzeug nicht gänzlich erreichbares Navigationsziel liegt, so dass der Fahrer als Fußgänger die korrekte Richtung beim Aufbruch vom Kraftfahrzeug wählen kann.

In einer besonders vorteilhaften Ausgestaltung kann auch eine mit besonderem Vorteil animierte Ergänzung eines an dem Kraftfahrzeug verbauten Fahrtrichtungsanzeigers (Blinkers) durch eine Fahrtrichtungsanzeigelichtfunktion bereitgestellt werden. Beispielsweise kann von der Position des Fahrtrichtungsanzeigers als weitere Beleuchtungseinrichtung des Kraftfahrzeugs ausgehend nach dessen Aufblinken der Blinkvorgang sozusagen über die in der entsprechenden Richtung anschließenden Ausleuchtsegmente, die ja in Abstandsrichtung aufeinander folgen, fortgesetzt werden, um so die Wahrnehmbarkeit des Fahrtrichtungsanzeigevorgangs deutlich zu verbessern und somit auch die Sicherheit des eigenen Kraftfahrzeugs zu erhöhen. Selbstverständlich sind auch andere Ausgestaltungen denkbar, bei denen beispielsweise der gesamte Seitenbereich neben dem Kraftfahrzeug in der Richtung, in der auch das Blinksignal des Fahrtrichtungsanzeigers gegeben wird, mit blinkt bzw. eine Fahrtrichtungsanzeigeranimation auf dieser Seite des Kraftfahrzeugs wiedergegeben wird.

Hinsichtlich der Zusatzinformation sieht eine besonders bevorzugte Ausgestaltung der vorliegenden Erfindung vor, dass diese einen Parameter umfasst, der über eine Ausdehnung eines ausgeleuchteten Intervalls in der Abstandsrichtung und/oder eine Geschwindigkeit einer Dynamik der Ausleuchtung und/oder über eine Lichtfarbe und/oder einen Lichtfarbverlauf in Abstandsrichtung angezeigt wird. Beispielsweise ist es denkbar, je nach Höhe des Werts des Parameters eine bestimmte Anzahl von Ausleuchtsegmenten in der Abstandsrichtung zu aktivieren bzw. in einer bestimmten Lichtfarbe und/oder Lichtintensität auszuleuchten. Denkbar ist auch eine Wiedergabe eines Zahlenwertes durch eine Geschwindigkeit einer insbesondere abstandsbezogenen Dynamik der Ausleuchtung, nachdem beispielsweise mit zunehmendem Wert ein schnelleres Lauflicht oder dergleichen, insbesondere nach außen von dem Kraftfahrzeug weg oder zu dem Kraftfahrzeug hin durch die Distanzsegmentierung, eingesetzt werden kann. Auch Farbskalen können selbstverständlich eingesetzt werden, um den Wert eines Parameters abzubilden.

Ferner ist es bezüglich der Zusatzinformation denkbar, dass die Zusatzinformation eine auf den Untergrund der Umgebung zu projizierende, gemäß der bevorzugt matrixartigen Segmentierung aufgelöste Bildinformation umfasst. Insbesondere dann, wenn eine hohe Auflösung gewählt wird, beispielsweise Ausleuchtsegmente einer Maximalausdehnung von weniger als 50 cm, bevorzugt weniger als 20 cm, realisiert werden, können mithin auch Bildinformationen, beispielsweise Symbole, Buchstaben/Texte, Zahlen, Pfeile, Piktogramme und dergleichen als Zusatzinformation mittels der Ausleuchteinrichtung und ihrer Segmente ausgegeben werden, und zwar letztlich an beliebigen Stellen um das Kraftfahrzeug herum, wobei auch eine Vielzahl solcher Bildinformationen gleichzeitig auf verschiedenen Seiten des Kraftfahrzeugs ausgegeben werden kann.

In einer konkreten Ausgestaltung kann die Zusatzinformation eine Warninformation, insbesondere bezüglich eines Diebstahlversuchs und/oder eines erkannten Fußgängers und/oder eines bevorstehenden Losfahrens des Kraftfahrzeugs, und/oder eine Erinnerungsinformation bezüglich einer an dem Kraftfahrzeug vorzunehmenden Handlung und/oder einer auf einen Ladevorgang und/oder Tankvorgang bezogene Ladeinformation, insbesondere einen Ladezustand und/oder Füllzustand als Parameter umfassende Ladeinformation und/oder eine einen Ladestart und/oder einen Ladeabschluss anzeigende Ladeinformation, und/oder eine Notfallinformation, insbesondere ein erweitertes Warnblinklicht und/oder ein Paniklicht, und/oder eine zukünftige geplante und/oder empfohlene Trajektorie des Kraftfahrzeugs, insbesondere zur Realisierung eines Spurzusammenführungsassistenten oder Spurwechselassistenten, verwendet werden.

Durch die Ausleuchteinrichtung und ihren erfindungsgemäßen Betrieb lässt sich also beispielsweise eine Diebstahlwarnung und/oder ein Hinweis auf Gefahr realisieren, so dass beispielsweise zusätzlich zu einer akustischen Diebstahlwarnung, wie sie bekannt ist, auch eine optische, visuelle Diebstahlwarnung im Ausleuchtbereich erfolgen kann, die zudem mit besonderem Vorteil Aktionen eines noch aktiven Diebes besonders gut erkennbar machen kann. In diesem Kontext kann über die erfindungsgemäß realisierte Umfeldbeleuchtung, beispielsweise im automatisierten Fahrbetrieb unter Nutzung eines zur vollständig automatischen Führung des Kraftfahrzeugs ausgebildeten Fahrzeugsystems, auch die Richtung detektierter Fußgänger signalisiert werden, was beispielsweise durch die winkelabhängige Zuschaltung, Dimmung und/oder Farbänderung von Ausleuchtsegmenten erfolgen kann, um dem Fußgänger zu vermitteln, dass das insbesondere vollautomatisch geführte Kraftfahrzeug den Fußgänger erkannt hat. Auch ein Wiederanfahren des Kraftfahrzeugs kann anderen Verkehrsteilnehmern derart signalisiert werden, beispielsweise durch zweimaliges Pulsieren im gesamten Ausleuchtbereich.

Ein anderes Beispiel ist eine Erinnerungslichtfunktion, bei der letztlich durch die Art und insbesondere auch Lokalisierung eines Ausleuchtmusters ein Hinweis auf eine an dem Kraftfahrzeug vorzunehmende Handlung erfolgen kann, beispielsweise ein noch zu schließendes Fenster des Kraftfahrzeugs, ein im Kraftfahrzeug verbliebenes Objekt und dergleichen.

Eine besonders vorteilhafte Ausgestaltung ergibt sich bei Verwendung von auf einen Ladevorgang und/oder Tankvorgang bezogenen Ladeinformationen. Dabei bezieht sich ein Ladevorgang insbesondere auf ein mit einem Elektromotor mit einer zugeordneten Hochspannungsbatterie, die von extern geladen werden kann, ausgestattetes Kraftfahrzeug. Eine solche Lade- und/oder ähnliche, auf einen Treibstoff bezogene Tankfunktion kann dabei verschiedene Zusatzinformationen ausgeben und auch Umgebungsrichtungen und/oder Umgebungsobjekte betreffen, beispielsweise, wie bereits erwähnt, das Ausleuchten einer Umgebungsrichtung zu einer Ladeeinrichtung, insbesondere Ladesäule, und/oder Tanksäule bzw. deren Anleuchten/Hervorhebung. Insbesondere kann dann, wenn sich das Kraftfahrzeug an einer Ladeeinrichtung oder Tanksäule befindet, über die Ausleuchteinrichtung mithin eine Umgebungsbeleuchtung realisiert werden, um dunkle Umgebungen geeignet für einen Lade- und/oder Tankvorgang auszuleuchten. Mit besonderem Vorteil kann jedoch der Beginn, der Fortschritt und der Abschluss eines Ladevorgangs durch Dimmung, Farbwechsel und/oder Zuschaltung von Ausleuchtsegmenten visualisiert werden. Beispielsweise kann ein Ladezustand einer Hochspannungsbatterie des Kraftfahrzeugs als Parameter in der Zusatzinformation enthalten sein, so dass beispielsweise der Ladefortschritt nach Art eines Balkendiagramms in der gesamten Umgebung des Kraftfahrzeugs, insbesondere über den gesamten Umfang des Kraftfahrzeugs, angezeigt werden kann, beispielsweise, indem, wie von anderen Ladevorgängen bei anderen Geräten bekannt, bei einem niedrigen Ladezustand zunächst nur wenigstens ein Ausleuchtsegment nahe am Kraftfahrzeug erleuchtet wird und mit zunehmendem Ladezustand nach außen hin weiter beabstandete, benachbarte Ausleuchtsegmente hinzugeschaltet werden, wobei der Beginn bzw. das Ende des Ladevorgangs beispielsweise durch ein Blinken dieser Ladezustandsanzeige signalisiert werden können. Selbstverständlich sind auch Ausgestaltungen denkbar, in denen eine entsprechende Darstellung über Lichtfarben bzw. einen Lichtfarbverlauf und/oder unterschiedliche Helligkeiten (Lichtintensitäten) umgesetzt wird. Auf diese Weise wird eine komplette Unterstützung und Informationsausgabe bei einem Ladevorgang oder auch einem Tankvorgang bereitgestellt.

Die Ausleuchteinrichtung kann in einem anderen Beispiel auch genutzt werden, um eine Notfallinformation, insbesondere ein erweitertes Warnblinklicht und/oder ein Paniklicht, umzusetzen. Eine derartige Notfallinformation kann beispielsweise einen aktiven Notruf eines kraftfahrzeugeigenen Notrufsystems wiedergeben, aber auch allgemein eine aktive Gefahrenwarnung oder einen aktiven Panikmodus anzeigen. Insbesondere kann dabei durch eine Intensitätsvariation und/oder einen Farbwechsel des Umgebungslichts im Ausleuchtbereich eine Sensibilisierung, insbesondere anderer Verkehrsteilnehmer, auf die jeweilige Situation erreicht werden.

Eine weitere vorteilhaft bei insbesondere matrixartig segmentiertem Ausleuchtbereich ausgebbare Zusatzinformation betrifft eine geplante und/oder empfohlene Trajektorie des Kraftfahrzeugs. Diese ist insbesondere auch im Rahmen einer Rangierlichtfunktion nützlich, nachdem beispielsweise die Trajektorie bei Rangiervorgängen durch aktive Ausleuchtsegmente visualisiert werden kann. Bezüglich des Rangierlichts sei zudem angemerkt, dass auch eine allgemeine Unterstützung erfolgen kann, beispielsweise eine Aktivierung rückwärtiger Ausleuchtsegmente der Ausleuchteinrichtung bei einer Rückwärtsfahrt und/oder eine Realisierung einer Beleuchtung mit einem Schwerpunkt entgegen der Lenkrichtung im vorderen Bereich des Kraftfahrzeugs, was die Hinderniswahrnehmung bei Rückwärtsfahrten erleichtert (inverses Kurvenlicht), und/oder dergleichen.

Besonders vorteilhaft kann auch ein Spurwechselassistent die Ausleuchteinrichtung nutzen, um beispielsweise eine empfohlene Spurwechseltrajektorie besser wiedergeben zu können. Besonders zweckmäßig ist auch ein Spurzusammenführungsassistent, bei dem am Ende von Fahrspuren andere Verkehrsteilnehmer zum Reißverschlussverfahren (Einfädelung vor dem eigenen Kraftfahrzeug) aufgefordert werden können, indem beispielsweise in Fahrtrichtung animierte Ausleuchtsegmente an der Fahrzeugseite und/oder Fahrzeugvorderseite angezeigt werden. Auch eine Vorfahrtsignalisierungslichtfunktion kann im Rahmen der vorliegenden Erfindung umgesetzt werden, indem beispielsweise eine gewährte Vorfahrt in einer vergleichbaren Animation an der Fahrzeugfront (Verkehr passieren lassen) erfolgen kann.

Die Ausleuchteinrichtung kann besonders zweckmäßig, insbesondere zusätzlich, auch zur Realisierung von weiteren, grundsätzlich bereits bekannten Funktionalitäten, mithin Lichtfunktionen, eingesetzt werden. Beispielsweise kann die Ausleuchteinrichtung zusätzlich zur Realisierung einer Orientierungslichtfunktion, insbesondere nach Ankunft oder vor Abfahrt und/oder zur Ausleuchtung eines Türbereichs, und/oder einer, wie bereits beschrieben, Rangierlichtfunktion, insbesondere eines Rückfahrtlichtes und/oder eines, insbesondere bei einer Rückwärtsfahrt des Kraftfahrzeugs zu nutzenden, Kurvenlichtes, betrieben werden. Orientierungslichtfunktionen, insbesondere sogenannte "Coming Home"- bzw. "Leaving Home"-Funktionen, können mit der erfindungsgemäßen Ausleuchteinrichtung in verbesserter Inszenierung realisiert werden. Beispielsweise kann ein Benutzer über eine Personalisierungsinformation Animationen und/oder allgemein Ausleuchtmuster einer solchen Orientierungslichtfunktion personalisieren, welche dann anschließend in einem individuellen Nutzerprofil abgespeichert werden können und erneut aufgerufen werden können. Selbstverständlich kann die Abspeicherung, insbesondere des Benutzerprofils, auch in der bereits erwähnten Datenbank erfolgen.

In einer vorteilhaften Weiterbildung des erfindungsgemäßen Verfahrens kann ferner vorgesehen sein, dass die Lichtintensität der ausgeleuchteten Ausleuchtsegmente in Abhängigkeit von einer die Umgebungshelligkeit beschreibenden Eingangsinformation gewählt wird. Mit anderen Worten kann gemäß der vorliegenden Erfindung die Ausleuchteinrichtung mit einer adaptiven, umweltsensitiven Intensitätsvariation versehen sein, wobei insbesondere immer dann, wenn die Umgebungshelligkeit eine parametrierbare Schwelle unterschreitet, gegebenenfalls unter Beachtung weiterer Randbedingungen eine Dimmung der Umfeldbeleuchtung auf einen niedrigeren Pegel, mithin eine niedrige Lichtintensität, erfolgen kann. Eine derartige aktive Dimmung begünstigt die Wahrnehmung in dunkleren Umgebungen und vermeidet Blendung. Beispielsweise kann wenigstens eine Look-up-Tabelle vorgesehen sein, in der ein Dimmungsgrad bestimmten Werten der Umgebungshelligkeit, insbesondere unterhalb der parametrierbaren Schwelle, zugeordnet ist. Sind die Randbedingungen der aktiven Dimmung nicht mehr gegeben, steigt insbesondere die Umgebungshelligkeit über die parametrierbare Schwelle, wird die Lichtintensität auf den höheren Pegel angehoben.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine Prinzipskizze eines Ausleuchtmoduls,
- Fig. 3: das Kraftfahrzeug mit einem es umgebenden Ausleuchtbereich,
- Fig. 4: eine erste beispielhafte Ausleuchtsituation,
- Fig. 5: eine zweite beispielhafte Ausleuchtsituation,
- Fig. 6: eine dritte beispielhafte Ausleuchtsituation,
- Fig. 7: eine vierte beispielhafte Ausleuchtsituation, und
- Fig. 8: eine fünfte beispielhafte Ausleuchtsituation.

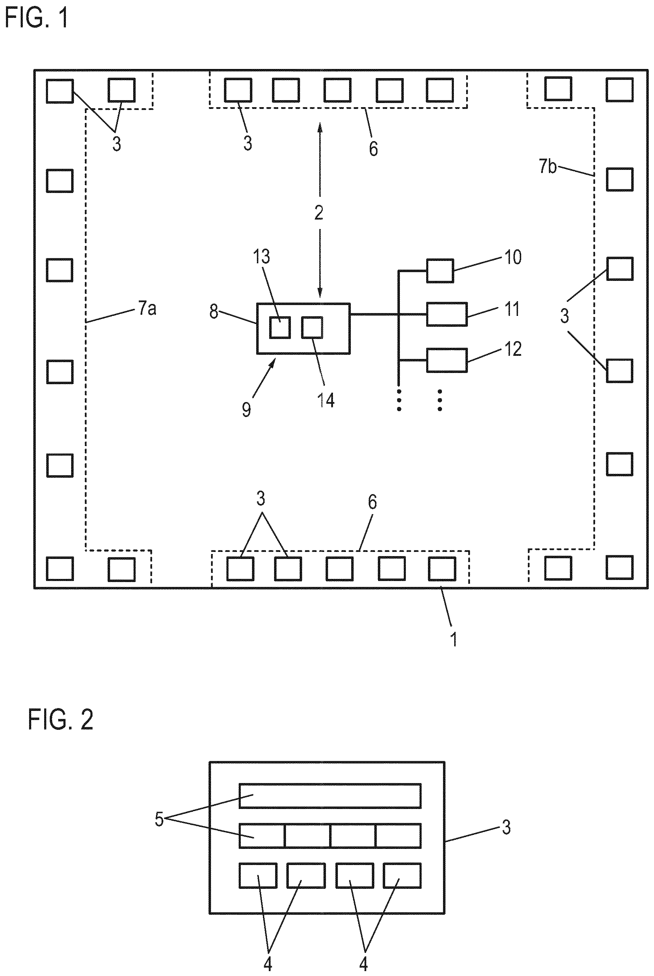

Fig. 1 zeigt eine Prinzipskizze eines erfindungsgemäßen Kraftfahrzeugs 1. Das Kraftfahrzeug 1 weist eine Ausleuchteinrichtung 2 auf, vorliegend zusätzlich zu weiteren Beleuchtungseinrichtungen wie Scheinwerfern, Heckleuchten, Fahrtrichtungsanzeigern, Rückfahrscheinwerfern, Bremslichtern, Nummernschildbeleuchtungen und dergleichen. Die Ausleuchteinrichtung weist dabei am Außenumfang des Kraftfahrzeuges bodennah verbaute, konkret integrierte, Ausleuchtmodule 3 auf, die, wie in Fig. 2 schematisch dargestellt, wenigstens eine Lichtquelle 4 sowie optional wenigstens eine Optickomponente 5 umfassen können. Bei den Lichtquellen 4 kann es sich beispielsweise um Leuchtdioden bzw. Leuchtdiodenanordnungen handeln, beispielsweise eine Leuchtdiodenanordnung, die wenigstens eine rote, eine grüne und eine blaue Leuchtdiode umfasst und somit in der Lage ist, verschiedenfarbiges Licht bei entsprechender Ansteuerung auszusenden. Optickomponenten können Linsen, Blenden, Filter und dergleichen sein. Insbesondere ist es denkbar, dass ein Ausleuchtmodul wenigstens eine Lichtquelle 4 und gegebenenfalls wenigstens eine Optikkomponente 5 aufweist, um eine Projektionseinrichtung zu bilden, die es erlaubt, wenigstens eine im Wesentlichen scharf begrenzte Lichtfläche in der Umgebung des Kraftfahrzeugs 1 auszuleuchten, die ein Ausleuchtsegment bilden kann, wie im Folgenden noch näher erläutert wird. Ferner kann, beispielsweise durch Pulsweitenmodulation, eine Ansteuerung für unterschiedliche Lichtintensitäten erfolgen.

Zurückkehrend zu Fig. 1 ist der bodennahe Verbau der Ausleuchtmodule 3, mithin der Lichtquellen 4 und der optionalen Optikkomponenten 5, dadurch erreicht, dass die Ausleuchtmodule 3 in den beiden seitlichen Schwellern 6, der Frontschürze 7 und der Heckschürze 8 verbaut sind. Zusätzlich können Ausleuchtmodule auch in Stoßfängern und/oder dem Unterboden des Kraftfahrzeugs 1 verbaut sein.

Der Betrieb der Ausleuchtmodule 3 wird von einer Steuereinrichtung 8 der Ausleuchteinrichtung 2 gesteuert, über die verschiedene Lichtfunktionen eines Fahrzeugsystems 9, zu dem auch die Steuereinrichtung 8 gehört, umgesetzt werden können. Zum Erhalt geeigneter Eingangsinformationen für die Lichtfunktionen ist die Steuereinrichtung 8, beispielsweise über ein Bussystem des Kraftfahrzeugs 1, mit Umfeldsensoren 10 des Kraftfahrzeugs 1 sowie weiteren Fahrzeugsystemen 11 verbunden. Das Kraftfahrzeug 1 weist auch eine Eingabeeinrichtung 12 auf, über die von einem Benutzer Personalisierungsinformationen hinsichtlich der Ausleuchteinrichtung 2 bzw. der Lichtfunktionen entgegengenommen werden können.

Zur Umsetzung verschiedener Lichtfunktionen weist die Steuereinrichtung 8 eine Auswertungseinheit 13 auf, in der eine Ausleuchtinformation bestimmt werden kann, die Information zum gewünschten Ausleuchtergebnis enthält. Diese Ausleuchtungsinformation wird in einer Ansteuereinheit 14 entsprechend umgesetzt in Ansteuersignale für die Ausleuchtmodule 3, mithin die Lichtquellen 4 sowie optional die Optikkomponenten 5, wobei die Ansteuerung über wenigstens ein Bussystem des Kraftfahrzeugs, beispielsweise einen LIN-Bus und/oder einen CAN-Bus, erfolgen kann.

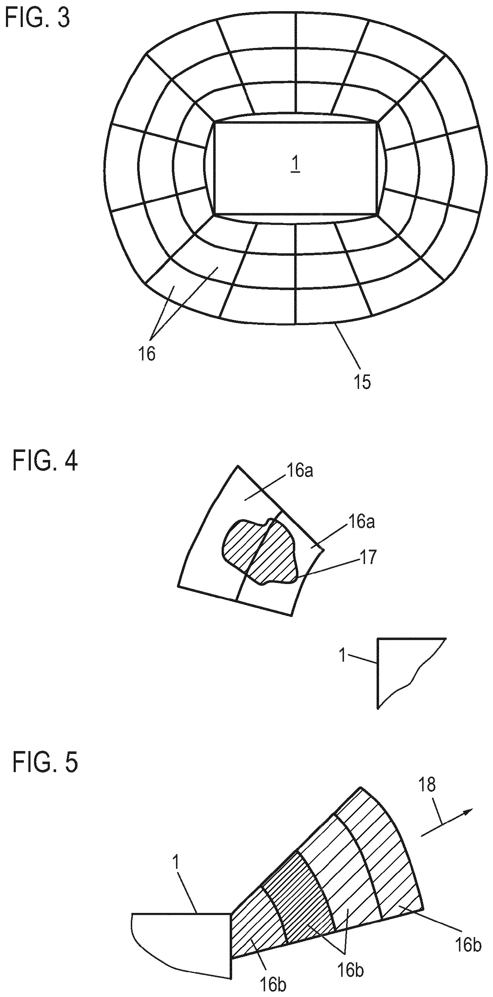

Aufgrund der Anordnung und Ausgestaltung der Ausleuchtmodule 3 sowie deren Ansteuerungsmöglichkeiten weist die Ausleuchteinrichtung 2, wie in Fig. 3 gezeigt ist, einen in Umfangsrichtung die gesamte Umgebung des Kraftfahrzeugs 1 abdeckenden, gleichzeitig ausleuchtbaren Ausleuchtbereich 15 auf, der in unabhängig ansteuerbare, hier zumindest schematisch angedeutete Ausleuchtsegmente 16 unterteilt ist, die sowohl in Umfangsrichtung als auch in Abstandsrichtung von dem Kraftfahrzeug 1 aufeinander folgen.

Insgesamt kann man sagen, dass der maximal mögliche Ausleuchtbereich 15 matrixartig in die Ausleuchtsegmente 16 aufgeteilt ist, wobei in Fig. 3 zur besseren Darstellbarkeit eine relativ grobe Auflösung mit großen Ausleuchtsegmenten 16 gezeigt ist, selbstverständlich jedoch auch eine feinere Auflösung in Umfangsrichtung und/oder Abstandsrichtung möglich ist, beispielsweise bis in den Zentimeterbereich, insbesondere mit Kantenlängen kleiner als 20 cm, hinein. Während die Ausleuchtbereiche 16 teilweise überlappen können, ist eine Auslegung der Ausleuchteinrichtung 2 zur möglichst scharfen Begrenzung der Ausleuchtsegmente 16 bevorzugt.

Im vorliegenden Ausführungsbeispiel erstreckt sich der Ausleuchtbereich an jeder Position entlang des Umfangs von einem Startwert, der von 0 bis 0,2 m betragen kann, bis zu einem Endwert, der 2,5 bis 3,5 m, insbesondere bis 3 m, betragen kann, ausgehend vom Kraftfahrzeug 1. Das bedeutet, die Ausleuchteinrichtung 2 bezieht sich insbesondere auf den Nahbereich um das Kraftfahrzeug 1, insbesondere möglichst nah an diesem oder gegebenenfalls sogar unterhalb des Kraftfahrzeugs 1 beginnend. Entsprechend sind auch andere Ausführungsbeispiele denkbar, in denen der Ausleuchtbereich 15 grundsätzlich wenigstens direkt am Kraftfahrzeug 1 beginnt.

Die Segmentierung sowohl in Umfangsrichtung als auch in Abstandsrichtung kann von verschiedenen Lichtfunktionen auf unterschiedliche Art und Weise vorteilhaft genutzt werden. Insbesondere können Umgebungsobjekte, beschrieben durch die Ausleuchtungsinformation, angeleuchtet und/oder hervorgehoben werden, Umgebungsrichtungen angezeigt werden und/oder Zusatzinformationen, insbesondere Kommunikationsinformationen, angezeigt werden.

Fig. 4 zeigt eine Möglichkeit zur Hervorhebung eines Umgebungsobjekts 17. Ersichtlich werden dort jene Ausleuchtsegmente 16a ausgeleuchtet bzw. von umgebenden Ausleuchtsegmenten 16 unterscheidbar ausgeleuchtet, dass das Umgebungsobjekt 17 entsprechend ausgeleuchtet bzw. hervorgehoben wird. Dabei sei an dieser Stelle noch angemerkt, dass die Ausgestaltung der Ausleuchteinrichtung 2 im Allgemeinen derart ist, dass für die Ausleuchtsegmente 16 unterschiedliche Lichtintensitäten (Helligkeiten) und unterschiedliche Lichtfarben gewählt werden können, wobei die Lichtintensitäten insbesondere auch in Form einer stufenlosen Dimmbarkeit, beispielsweise durch ein Pulsweitenmodulationsverfahren erreicht werden können.

Es sind auch andere Varianten zur Hervorhebung eines Umgebungsobjekts 17 denkbar, beispielsweise durch unterscheidbare Ausleuchtung von das Umgebungsobjekt 17 umgebenden Ausleuchtsegmenten 16 oder dergleichen.

Im Übrigen ist der Begriff des Umgebungsobjekts hier breit zu verstehen, nachdem auch beispielsweise ausgezeichnete Umgebungsbereiche, beispielsweise klar definierte Flächen in der Horizontalen, Umgebungsobjekte bilden können, neben gegenständlichen Umgebungsobjekten. Umgebungsobjekte können insbesondere durch Auswertung von Sensordaten des wenigstens einen Umfeldsensors 10, welche entsprechend als Eingangsinformation dienen können, detektiert werden.

Fig. 5 zeigt eine Möglichkeit zur Anzeige einer Umgebungsrichtung 18. Dabei werden in der Umgebungsrichtung 18 liegende Ausleuchtsegmente 16b nicht nur unterschiedlich zu benachbarten Ausleuchtsegmenten 16 angesteuert, sondern auch untereinander unterschiedlich, um die Hervorhebung besonders intuitiv zu gestalten. Konkret werden in der Umgebungsrichtung 18 aufeinanderfolgende Ausleuchtsegmente 16b hier sowohl untereinander unterschiedlich als auch in einer zeitlich dynamischen Abfolge ausgeleuchtet. Beispielsweise kann ein heller ausgeleuchtetes Ausleuchtsegment 16b die Folge von Ausleuchtsegmenten 16b vom Kraftfahrzeug 1 ausgehend durchlaufen, um so die Umgebungsrichtung 18, insbesondere als vom Kraftfahrzeug weg, anzuzeigen.

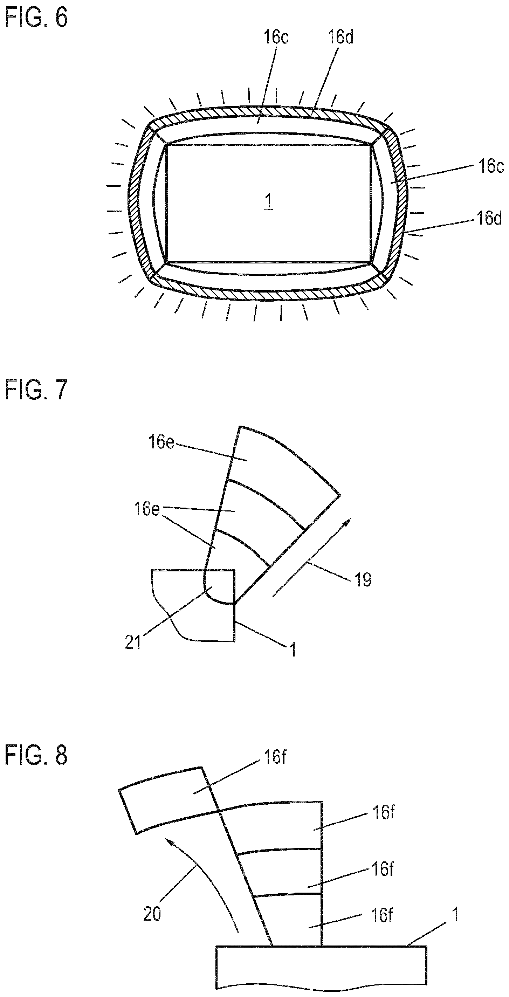

In der Ausleuchtsituation der Fig. 6 soll eine Zusatzinformation, vorliegend ein Parameter, angezeigt werden. Dafür werden ausgehend vom Kraftfahrzeug 1 in Abstandsrichtung Ausleuchtsegmente 16c, 16d entsprechend dem Wert des Parameters ausgeleuchtet, wobei insbesondere bei einem sich über die Zeit verändernden Parameter die jeweils äußersten Ausleuchtsegmente 16d, die letztlich dem Wertebereich entsprechen, den der Wert des Parameters gerade inne hat, blinkend wiedergegeben werden können, um diese zeitliche Veränderung wiederzugeben. Ein bevorzugtes Beispiel, welches im Folgenden auch noch genauer dargelegt werden wird, ist der Ladezustand einer Hochspannungsbatterie des Kraftfahrzeugs 1 während eines Ladevorgangs. Die dauerhaft bzw. gleichmäßig ausgeleuchteten inneren Segmente 16c zeigen die bereits abgeschlossene Ladetätigkeit an, während das blinkende Segment 16d den noch aktuellen Ladevorgang anzeigt und wiedergibt, in welchem Ladezustandsbereich die Ladetätigkeit sich gerade abspielt. Selbstverständlich sind auch andere Möglichkeiten denkbar, einen Parameter als Zusatzinformation im Allgemeinen darzustellen, neben der hier dargestellten Ausdehnung eines ausgeleuchteten Interwalls in der Abstandsrichtung. So ist es beispielsweise denkbar, eine Geschwindigkeit der zeitlichen Dynamik der Ausleuchtung, eine Lichtfarbe, ein Lichtfarbverlauf oder dergleichen zu verwenden, um den Parameter unter Nutzung der Segmentierung wiederzugeben.

Fig. 7 illustriert eine mögliche Nutzung der Ausleuchteinrichtung 2 für eine dynamische Fahrtrichtungsanzeigefunktion. Dort wird davon ausgegangen, dass das Kraftfahrzeug als weitere Beleuchtungseinrichtung wenigstens einen Fahrtrichtungsanzeiger 21 (Blinker) aufweist. Das Blinken dieses Blinkers kann mittels der in Abstandsrichtung aufeinanderfolgenden Ausleuchtsegmente 16e in der Blinkrichtung 19 sozusagen fortgesetzt werden, nachdem nach der Beleuchtung des Fahrtrichtungsanzeigers 21 durchlaufend vom Kraftfahrzeug 1 her die Ausleuchtsegmente 16e folgen, was deutlicher erkennbar und intuitiv die Absicht des Fahrers des Kraftfahrzeugs 1 wiedergibt.

Fig. 8 zeigt schließlich einen möglichen Einsatz der Ausleuchteinrichtung 2 bei einem Spurwechselassistenten bzw. einem Spurzusammenführungsassistenten. Hierbei zeigen die Ausleuchtsegmente 16f durch ihre Ausleuchtung bzw. hervorgehobene Ausleuchtung in zeitlicher dynamischer oder räumlicher Hinsicht anderen Verkehrsteilnehmern an, dass das Kraftfahrzeug 1 nun einen Spurwechsel gemäß dem Pfeil 20 beabsichtigt. Insbesondere in Kombination mit weiteren Zusatzinformationen, insbesondere Symboliken, kann so der Verkehr um das Kraftfahrzeug 1 herum organisiert werden, beispielsweise um ein Reißverschlussverfahren bei einer Spurzusammenführung zu erreichen.

Im Rahmen des hier ausgestellten Ausführungsbeispiels sind noch eine Vielzahl weiterer Lichtfunktionen möglich, die im Folgenden zumindest kurz erwähnt werden sollen. So kann beispielsweise eine Annäherungslichtfunktion realisiert werden, wobei immer dann, wenn sich das Kraftfahrzeug während eines Parkvorgangs einem Hindernis nähert, der Bereich zum Hindernis als Umgebungsobjekt durch Ausleuchtsegmente 16 der Umfeldbeleuchtung stärker ausgeleuchtet werden kann. Auch das Hindernis selbst kann selbstverständlich, wie beschrieben, hervorgehoben werden. Liegt das Hindernis außerhalb des Ausleuchtbereichs 15, kann die Umgebungsrichtung zu diesem Hindernis ausgeleuchtet werden.

Über die Beleuchtungseinrichtung 2 kann auch eine Notfallinformation ausgegeben werden oder aber eine Warninformation bezüglich eines Diebstahlversuchs. So kann bei aktiver Diebstahlwarnung, einem aktiven Notruf eines internen Notrufsystems des Kraftfahrzeugs 1 oder einem aktiven Panikmodus dies anderen Verkehrsteilnehmern mittels einer Lichtintensitätsvariation und/oder Lichtfarbvariation in insbesondere allen Ausleuchtsegmenten 16 mitgeteilt werden.

In einer weiteren bevorzugten Lichtfunktion kann eine Distanzempfehlung für Zweiräder, insbesondere Fahrradfahrer und/oder Motorroller bzw. eine diesbezügliche Überholwarnung realisiert werden. Innerstädtisch und auf Landstraßen kann um die Position von vorausfahrenden Zweirädern oder Motorrollern eine Distanzempfehlung realisiert werden, indem die das entsprechende Umgebungsobjekt umgebenden Ausleuchtsegmente 16 entsprechend ausgeleuchtet werden, beispielsweise hervorhebend oder grundsätzlich betrieben. Die Zahl der ausgeleuchteten Ausleuchtsegmente gibt dann letztlich eine Distanzempfehlung, die visualisiert ist. So kann ein gefahrloses Überholen ermöglicht werden. In einer anderen Ausprägung kann dem Überholenden über die Ausleuchteinrichtung 2 auch ein Mindestabstand dargestellt werden, um die Fahrzeuginsassen sowie den Überholten vor Risiken zu schützen.

Eine weitere denkbare Lichtfunktion betrifft Folgefahrten, bei denen die Reichweite der konventionellen Ausleuchtung, beispielsweise durch Scheinwerfer, reduziert wird und die Umfeldbeleuchtung der Ausleuchteinrichtung 2 hinzugeschaltet werden kann. Dies dient der Sensibilisierung auf die eigene Position bei gleichzeitiger Energieeinsparung.

Allgemein gesagt können, beispielsweise in einer "Gefahrenspot"-Lichtfunktion, Gefahrenpotenziale durch Ausleuchtung hervorgehoben und besser erkennbar gemacht werden, beispielsweise nicht überfahrbare Hindernisse als Umgebungsobjekte.

Als Zusatzinformationen können in Lichtfunktionen, die insbesondere für einen vollautomatischen Betrieb des Kraftfahrzeugs in einem zur vollständig automatischen Führung des Kraftfahrzeugs ausgebildeten Fahrzeugsystem 11 nützlichen Lichtfunktion beispielsweise Umgebungsrichtung 18 in Richtung von detektierten Fußgängern angezeigt bzw. hervorgehoben werden, um den Fußgängern zu vermitteln, dass sie erkannt wurden. Ein Wiederanfahren des Kraftfahrzeugs 1 kann beispielsweise durch zweimaliges Pulsieren im gesamten Ausleuchtbereich 15 angezeigt werden.

Eine besonders vorteilhafte Ausgestaltung ergibt sich mit einer assistierenden Lichtfunktion für einen Tankvorgang oder, mit besonderem Vorteil, für einen Ladevorgang, bei dem eine Hochspannungsbatterie des Kraftfahrzeugs 1, aus der ein Elektromotor des Kraftfahrzeugs 1 gespeist wird, aufgeladen wird, was meistens einen etwas längeren Zeitraum in Anspruch nimmt. Die Ausleuchteinrichtung 2 erlaubt es nun nicht nur, gezielt die entsprechende Ladeeinrichtung, beispielsweise eine Ladesäule, hinreichend auszuleuchten, sondern kann auch eine Ladestartanzeige, eine Ladezustandsanzeige und eine Ladeabschlussanzeige realisieren, wie bezüglich der Fig. 6 bereits teilweise beschrieben wurde. Der Start, der Fortschritt und der Abschluss eines Ladevorgangs können entsprechend durch Lichtintensitätsvariationen, Lichtfarbwechsel und/oder Zuschaltung von Ausleuchtsegmenten 16 visualisiert werden.

Eine weitere vorteilhafte Lichtfunktion ist durch ein "Pfützenlicht" gegeben. Damit kann es Insassen ermöglicht werden, Pfützen in unmittelbarer Nähe des Kraftfahrzeugs 1 beim Aussteigen zu erkennen, indem diese durch einzelne Ausleuchtsegmente 16 der Ausleuchteinrichtung 2 hervorgehoben werden.

Neben dem bereits bezüglich Fig. 8 beschriebenen Beispiel kann es auch in anderen Fällen zweckmäßig sein, die zukünftige Fahrtrajektorie des Kraftfahrzeugs 1 als Zusatzinformation mittels der Ausleuchtsegmente 16 anzuzeigen, beispielsweise bei Rangiervorgängen.

Die Ausleuchteinrichtung 2 kann mit besonderem Vorteil auch zur Unterstützung einer Straßenbeleuchtung herangezogen werden. Beispielsweise können als Umgebungsobjekt 17 Dunkelstellen lokalisiert werden, welche gezielt zur Ergänzung der Straßenbeleuchtung ausgeleuchtet werden können. Grundsätzlich ist auch eine Unterstützung der Straßenbeleuchtung durch vollständigen Betrieb im gesamten Ausleuchtbereich 15 möglich. In beiden Varianten fungiert das eigene Kraftfahrzeug im geparkten Zustand oder im Stadtverkehr als zusätzliche Straßenbeleuchtung und leuchtet fahrzeugnahe Bereiche entsprechend aus. Die aktive Funktion kennzeichnet zudem das eigene Kraftfahrzeug im geparkten Zustand als potenzielles Hindernis.

Zweckmäßigerweise ist die Steuereinrichtung 8 auch dazu ausgebildet, eine adaptive umweltsensitive Intensitätsvariation bezüglich der Ausleuchteinrichtung 2 umzusetzen. Konkret kann dann, wenn die Umgebungshelligkeit, beispielsweise gemessen durch einen entsprechenden Umgebungshelligkeitssensor, eine parametrierbare Schwelle unterschreitet, eine Dimmung der Umfeldbeleuchtung durch die Ausleuchteinrichtung 2 erfolgen, da sie bei Dunkelheit einfacher zu erkennen ist. Dabei können auch weitere Randbedingungen berücksichtigt werden. Sobald die Umgebungshelligkeit wieder über die parametrierbare Schwelle steigt, wird die aktive Dimmung beendet.

Wie bereits dargelegt wurde, erlaubt die Verwendung einer Personalisierungsinformation eine Individualisierung zumindest eines Teils der Lichtfunktionen, die durch das Fahrzeugsystem 9 bzw. die Steuereinrichtung 8 bereitgestellt werden. Dies ist insbesondere zweckmäßig für assistierende Funktionen, die auch einen inszenierenden Charakter haben. Beispielsweise kann auch eine "Coming-Home"/"Leaving-Home"-Funktion vorgesehen sein, für die der Benutzer mittels der Eingabeeinrichtung 12 eigene Ausleuchtmuster, gegebenenfalls auch zeitlich dynamischer Natur, definieren und abspeichern kann. Dies kann selbstverständlich auch für andere Lichtfunktionen ermöglicht werden, beispielsweise die Ladelichtfunktion.

Die Ausleuchteinrichtung 2 kann auch besonders vorteilhaft bei Rangiervorgängen und dergleichen eingesetzt werden. Dort ist es beispielsweise möglich, bei Rückwärtsfahrt die rückwärtigen Ausleuchtsegmente 16 zu aktivieren, während im vorderen Bereich des Kraftfahrzeugs die Beleuchtung durch die Ausleuchteinrichtung 2 mit Schwerpunkt entgegen der Lenkrichtung erfolgt, sodass bei der Rückwärtsfahrt Hindernisse besser wahrgenommen werden können.

Zur konkreten Ansteuerung der Ausleuchtmodule 3 kann die Ausleuchtungsinformation der Auswertungseinheit 13 in der Ansteuereinheit 14 genutzt werden, um eine Ansteuerinformation, die ein Ausleuchtmuster beschreibt, zu ermitteln. Das Ausleuchtmuster kann dabei insbesondere räumliche und/oder zeitliche Unterschiede der Ausleuchtung unterschiedlicher Ausleuchtsegmente 16 beschreiben. Nachdem für einige Lichtfunktionen vordefinierte Ausleuchtmuster bereitgestellt werden können, die gegebenenfalls in Abhängigkeit von der Ausleuchtungsinformation noch weiter parametriert werden können, ist es zweckmäßig, innerhalb des Kraftfahrzeugs 1, insbesondere in der Steuereinrichtung 8, eine Datenbank vordefinierter Ausleuchtmuster durch entsprechende Ansteuerinformationen bereitzustellen, welche in Abhängigkeit von der Ausleuchtungsinformation abgerufen werden können.

## Patentansprüche

1. Kraftfahrzeug (1), aufweisend eine mehrere Lichtquellen (4) und eine Steuereinrichtung (8) umfassende Ausleuchteinrichtung (2) zum Ausleuchten eines in Umfangsrichtung die Umgebung des Kraftfahrzeugs (1) vollständig abdeckenden, gleichzeitig ausleuchtbaren Ausleuchtbereichs (15), wobei der Ausleuchtbereich (15) in mittels der Steuereinrichtung (8) im Rahmen wenigstens einer, insbesondere assistierenden, Lichtfunktion eines Fahrzeugsystems (9) unabhängig zur Ausleuchtung ansteuerbare Ausleuchtsegmente (16, 16a-f) aufgeteilt ist, wobei der Ausleuchtbereich (15) der Ausleuchteinrichtung (2) in einer Abstandsrichtung von dem Kraftfahrzeug (1) wenigstens zwei aufeinanderfolgende Ausleuchtsegmente (16, 16a-f) aufweist, wobei der Ausleuchtbereich (15) matrixartig in in Umfangsrichtung und Abstandsrichtung aufeinanderfolgende Ausleuchtsegmente (16, 16a-f) aufgeteilt ist, wobei jedes Ausleuchtsegment einen vordefinierten Umfangs- und Abstandsbereich abdeckt
**dadurch gekennzeichnet,**
**dass** die Steuereinrichtung (8) im Rahmen der Lichtfunktion zur dynamischen Anzeige einer insbesondere von dem Kraftfahrzeug (1) weg oder zu dem Kraftfahrzeug (1) hin gerichteten Umgebungsrichtung (18) durch unterschiedliche Ansteuerung von wenigstens zwei in Abstandsrichtung zueinander versetzten Ausleuchtsegmenten (16, 16a-f) derart ausgebildet ist, dass unterschiedliche Lichtintensitäten und/oder Lichtfarben in Abstandsrichtung aufeinander folgen und/oder eine zeitliche Dynamik nach Art eines Lauflichts von innen nach außen oder außen nach innen verwendet wird.

2. Kraftfahrzeug (1) nach Anspruch 1,
**dadurch gekennzeichnet,**
**dass** der Ausleuchtbereich (15) in der Abstandsrichtung eine Abstandsausdehnung von dem Kraftfahrzeug (1) beginnend bei 0 bis 0,2 m und/oder endend bei 2,5 bis 3,5 m aufweist.

3. Kraftfahrzeug (1) nach einem der vorangehenden Ansprüche,
**dadurch gekennzeichnet,**
**dass** die Lichtquellen (4) wenigstens eine LED und/oder wenigstens eine Laserlichtquelle und/oder wenigstens einen Projektor umfassen und/oder die Lichtquellen (4) wenigstens teilweise in wenigstens einem Schweller (6) und/oder einer Frontschürze (7a) und/oder einer Heckschürze (7b) und/oder einem Unterboden und/oder wenigstens einem Stoßfänger und/oder in wenigstens einem Radkasten und/oder in einem Spoiler und/oder in einem Kühlergrill und/oder in wenigstens einem Außenspiegel und/oder in wenigstens einer Tür und/oder wenigstens einer Heckklappe verbaut sind und/oder dass die Ausleuchteinrichtung (2) zur Ausleuchtung wenigstens eines Teils der Ausleuchtsegmente (16, 16a-f) in unterschiedlichen Lichtintensitäten und/oder Lichtfarben ausgebildet ist.

4. Kraftfahrzeug (1) nach einem der vorangehenden Ansprüche,
**dadurch gekennzeichnet,**
**dass** die Steuereinrichtung (8) im Rahmen der Lichtfunktion ferner zum abstandsbezogenen Anleuchten und/oder Hervorheben eines Umgebungsobjekts (17) und/oder zur dynamischen Anzeige einer durch ausgeleuchtete Intervalle des Ausleuchtbereichs (15) in Abstandsrichtung anzuzeigenden Zusatzinformation ausgebildet ist.

5. Verfahren zum Betrieb einer Ausleuchteinrichtung (2) eines Kraftfahrzeugs (1) nach einem der vorangehenden Ansprüche im Rahmen der Lichtfunktion des Fahrzeugsystems (9), umfassend folgende Schritte:
- Auswertung einer, insbesondere Sensordaten wenigstens eines Umfeldsensors (10) des Kraftfahrzeugs (1) umfassenden, Eingangsinformation der Lichtfunktion zur Ermittlung einer Ausleuchtungsinformation, die wenigstens eine anzuzeigende Umgebungsrichtung (18) beschreibt,
- Ansteuerung der Ausleuchteinrichtung (2) gemäß der Ausleuchtungsinformation zum Anleuchten und/oder Hervorheben des wenigstens einen Umgebungsobjekts (17) und/oder Anzeigen der wenigstens einen Umgebungsrichtung (18), wobei unterschiedliche Lichtintensitäten und/oder Lichtfarben in Abstandsrichtung aufeinander folgen und/oder eine zeitliche Dynamik nach Art eines Lauflichts von innen nach außen oder außen nach innen verwendet wird.

6. Verfahren nach Anspruch 5,
**dadurch gekennzeichnet,**
**dass** zur Ansteuerung gemäß der Ausleuchtungsinformation eine ein räumliches und/oder zeitliches Ausleuchtmuster beschreibende Ansteuerinformation ermittelt wird.

7. Verfahren nach Anspruch 6,
**dadurch gekennzeichnet,**
**dass** das Ausleuchtmuster räumlich und/oder zeitlich variierende Lichtintensitäten und/oder Lichtfarben umfasst und/oder wenigstens teilweise aus einer Datenbank vordefinierter Ausleuchtmuster, insbesondere in Abhängigkeit von der Ausleuchtungsinformation, abgerufen wird und/oder dass das Ausleuchtmuster wenigstens teilweise basierend auf einer von einem Benutzer bereitgestellten Personalisierungsinformation ermittelt wird.

8. Verfahren nach einem der Ansprüche 5 bis 7,
**dadurch gekennzeichnet,**
**dass** die Ausleuchtungsinformation ferner wenigstens ein anzuleuchtendes und/oder hervorzuhebendes Umgebungsobjekt (17) beschreibt und die Ausleuchteinrichtung (2) ferner zum Anleuchten und/oder Hervorheben des wenigstens einen Umgebungsobjekts (17) angesteuert wird, wobei zum Anleuchten und/oder Hervorheben des wenigstens einen Umgebungsobjekts (17) dieses enthaltende Ausleuchtsegmente (16, 16a-f) heller und/oder in einer anderen Lichtfarbe als eine Objektumgebung des Umgebungsobjekts (17) ausgeleuchtet werden, und/oder dass zum Anzeigen der wenigstens einen Umgebungsrichtung (18) in der Umgebungsrichtung (18) aufeinanderfolgende Ausleuchtsegmente (16, 16a-f) ferner von in Umfangsrichtung und/oder Abstandsrichtung benachbarten Ausleuchtsegmenten (16, 16a-f) unterschiedlich ausgeleuchtet werden.

9. Verfahren nach Anspruch 8,
**dadurch gekennzeichnet,**
**dass** als Umgebungsobjekt (17) eine Pfütze und/oder ein Zweiradfahrer, wobei insbesondere zusätzlich eine Distanzempfehlung als Zusatzinformation angezeigt wird, und/oder eine Gefahrenstelle und/oder ein Fußgänger und/oder eine Aufladeeinrichtung für einen Energiespeicher und/oder Tank des Kraftfahrzeugs (1) und/oder ein einen freizuhaltenden Seitenabstand kennzeichnender Freihaltebereich und/oder eine von einem Straßenlicht unterhalb eines Helligkeitsschwellwerts ausgeleuchtete Dunkelstelle und/oder ein zwischen dem eigenen Kraftfahrzeug (1) und einem unmittelbar vorausfahrenden und/oder nachfolgenden Kraftfahrzeug (1), insbesondere bei einer Folgefahrt, befindlicher Umgebungsbereich und/oder ein Hindernis und/oder ein zwischen dem Hindernis und dem Kraftfahrzeug (1) liegender Umgebungsbereich, insbesondere bei einem Einpark- und/oder Rangiervorgang, verwendet wird.

10. Verfahren nach einem der Ansprüche 5 bis 9,
**dadurch gekennzeichnet,**
**dass** als die Umgebungsrichtung (18) eine Annäherungsrichtung eines dynamischen Umgebungsobjekts (17) und/oder eine aktuelle Fahrtrichtung des eigenen Kraftfahrzeugs (1) und/oder eine ergänzend zu einem Fahrtrichtungsanzeiger an dem Kraftfahrzeug (1) anzuzeigende, durch ein Fahrtrichtungsanzeigersignal beschriebene Fahrtrichtungsanzeigerrichtung und/oder eine insbesondere von einem Navigationssystem und/oder einem Fahrerassistenzsystem gelieferte Sollbewegungsrichtung und/oder eine Richtung zu einem außerhalb des Ausleuchtbereichs (15) befindlichen Umgebungsobjekt (17) verwendet wird.

11. Verfahren nach einem der vorangehenden Ansprüche,
**dadurch gekennzeichnet,**
**dass** die Ausleuchtungsinformation ferner wenigstens eine durch ausgeleuchtete Intervalle des Ausleuchtbereichs (15) in Abstandsrichtung anzuzeigende Zusatzinformation beschreibt und die Ausleuchteinrichtung (2) ferner zur Anzeige der Zusatzinformation angesteuert wird, wobei die Ausleuchtungsinformation zusätzlich eine durch ausgeleuchtete Intervalle des Ausleuchtbereichs (15) in Abstandsrichtung anzuzeigende Zusatzinformation beschreibt.

12. Verfahren nach Anspruch 11,
**dadurch gekennzeichnet,**
**dass** die Zusatzinformation einen Parameter umfasst, der über eine Ausdehnung eines ausgeleuchteten Intervalls in der Abstandsrichtung und/oder eine Geschwindigkeit einer Dynamik der Ausleuchtung und/oder über eine Lichtfarbe und/oder einen Lichtfarbverlauf in Abstandsrichtung angezeigt wird, und/oder dass die Zusatzinformation eine auf den Untergrund der Umgebung zu projizierende, gemäß der Segmentierung aufgelöste Bildinformation umfasst.

13. Verfahren nach Anspruch 11 oder 12,
**dadurch gekennzeichnet,**
**dass** als die Zusatzinformation eine Warninformation, insbesondere bezüglich eines Diebstahlversuchs und/oder eines erkannten Fußgängers und/oder eines bevorstehenden Losfahrens des Kraftfahrzeugs (1), und/oder eine Erinnerungsinformation bezüglich einer an dem Kraftfahrzeug (1) vorzunehmenden Handlung und/oder eine auf einen Ladevorgang und/oder Tankvorgang bezogene Ladeinformation, insbesondere eine einen Lade- und/oder Füllzustand als Parameter umfassende Ladeinformation und/oder eine einen Ladestart und/oder einen Ladeabschluss anzeigende Ladeinformation, und/oder eine Notfallinformation, insbesondere ein erweitertes Warnblinklicht und/oder ein Paniklicht, und/oder eine zukünftige geplante und/oder empfohlene Trajektorie des Kraftfahrzeugs (1), insbesondere zur Realisierung eines Spurzusammenführungsassistenten oder Spurwechselassistenten, verwendet wird.

14. Verfahren nach einem der Ansprüche 5 bis 13,
**dadurch gekennzeichnet,**
**dass** die Ausleuchteinrichtung (2) zusätzlich zur Realisierung einer Orientierungslichtfunktion, insbesondere nach Ankunft oder vor Abfahrt und/oder zur Ausleuchtung eines Türbereichs, und/oder einer Rangierlichtfunktion, insbesondere eines Rückfahrlichtes und/oder eines, insbesondere bei einer Rückwärtsfahrt des Kraftfahrzeugs (1) zu nutzenden, Kurvenlichtes, betrieben wird.

15. Verfahren nach einem der Ansprüche 5 bis 14,
**dadurch gekennzeichnet,**
**dass** die Lichtintensität der ausgeleuchteten Ausleuchtsegmente (16, 16a-f) in Abhängigkeit von einer die Umgebungshelligkeit beschreibenden Eingangsinformation gewählt wird.

## Claims

1. Motor vehicle (1), having an illumination device (2), which comprises a plurality of light sources (4) and a control device (8), for illuminating an illumination region (15) which completely covers the surroundings of the motor vehicle (1) in the circumferential direction and which is able to be simultaneously illuminated, wherein the illumination region (15) is divided into illumination segments (16, 16a-f) which are controllable independently for illumination by means of the control device (8) in the context of at least one, in particular assisting, light function of a vehicle system (9), wherein the illumination region (15) of the illumination device (2) has at least two successive illumination segments (16, 16a-f) in a distance direction from the motor vehicle (1), wherein the illumination region (15) is divided in a matrix-like manner into illumination segments (16, 16a-f) which are successive in the circumferential direction and the distance direction, wherein each illumination segment covers a predefined circumferential and distance region,
**characterized**
**in that**, in the context of the light function, the control device (8) is designed for the dynamic display of a surroundings direction (18), in particular directed away from the motor vehicle (1) or towards the motor vehicle (1), by different control of at least two illumination segments (16, 16a-f) which are offset with respect to one another in the distance direction, in such a way that different light intensities and/or light colours follow one another in the distance direction and/or temporal dynamics in the manner of a chase light from the inner area outwards or from the outer area inwards are used.

2. Motor vehicle (1) according to Claim 1,
**characterized**
**in that** the illumination region (15) has, in the distance direction, a distance extent from the motor vehicle (1) beginning at 0 to 0.2 m and/or ending at 2.5 to 3.5 m.

3. Motor vehicle (1) according to either of the preceding claims,
**characterized**
**in that** the light sources (4) comprise at least one LED and/or at least one laser light source and/or at least one projector and/or the light sources (4) are at least partially installed in at least one sill (6) and/or a front apron (7a) and/or a rear apron (7b) and/or an underbody and/or at least one bumper and/or in at least one wheel housing and/or in a spoiler and/or in a radiator grille and/or in at least one exterior mirror and/or in at least one door and/or at least one tailgate and/or in that the illumination device (2) is designed for illuminating at least one portion of the illumination segments (16, 16a-f) in different light intensities and/or light colours.

4. Motor vehicle (1) according to any of the preceding claims,
**characterized**
**in that**, in the context of the light function, the control device (8) is furthermore designed for the distance-related illumination and/or highlighting of a surroundings object (17) and/or for the dynamic display of additional information to be displayed by illuminated intervals of the illumination region (15) in the distance direction.

5. Method for operating an illumination device (2) of a motor vehicle (1) according to any of the preceding claims in the context of the light function of the vehicle system (9), comprising the following steps:
- evaluating input information of the light function, said input information comprising in particular sensor data of at least one environment sensor (10) of the motor vehicle (1), in order to determine illumination information describing at least one surroundings direction (18) to be displayed,
- controlling the illumination device (2) in accordance with the illumination information for illuminating and/or highlighting the at least one surroundings object (17) and/or displaying the at least one surroundings direction (18), wherein different light intensities and/or light colours follow one another in the distance direction and/or temporal dynamics in the manner of a chase light from the inner area outwards or from the outer area inwards are used.

6. Method according to Claim 5,
**characterized**
**in that** control information describing a spatial and/or temporal illumination pattern is determined for the purpose of the controlling in accordance with the illumination information.

7. Method according to Claim 6,
**characterized**
**in that** the illumination pattern comprises spatially and/or temporally varying light intensities and/or light colours and/or is at least partially retrieved from a database of predefined illumination patterns, in particular depending on the illumination information, and/or in that the illumination pattern is determined at least partially on the basis of personalization information provided by a user.

8. Method according to any of Claims 5 to 7,
**characterized**
**in that** the illumination information furthermore describes at least one surroundings object (17) to be illuminated and/or highlighted and the illumination device (2) is furthermore controlled for illuminating and/or highlighting the at least one surroundings object (17), wherein for illuminating and/or highlighting the at least one surroundings object (17) illumination segments (16, 16a-f) containing the latter are illuminated more brightly and/or in a different light colour than object surroundings of the surroundings object (17), and/or in that for displaying the at least one surroundings direction (18) illumination segments (16, 16a-f) which are successive in the surroundings direction (18) are furthermore illuminated differently from illumination segments (16, 16a-f) which are adjacent in the circumferential direction and/or distance direction.

9. Method according to Claim 8,
**characterized**
**in that** what is used as the surroundings object (17) is a puddle and/or a cyclist, wherein in particular a distance recommendation is additionally displayed as additional information, and/or a hazard location and/or a pedestrian and/or a charging device for an energy store and/or tank of the motor vehicle (1) and/or a clearance region identifying a lateral distance to be kept clear and/or a dark location illuminated by a streetlight below a brightness threshold value and/or a surroundings region located between the ego motor vehicle (1) and a motor vehicle (1) travelling directly ahead and/or behind, in particular during convoy travel, and/or an obstacle and/or a surroundings region located between the obstacle and the motor vehicle (1), in particular during a parking and/or manoeuvring operation.

10. Method according to any of Claims 5 to 9,
**characterized**
**in that** what is used as the surroundings direction (18) is an approach direction pertaining to a dynamic surroundings object (17) and/or a current direction of travel of the ego motor vehicle (1) and/or a direction of travel indicator direction which is to be displayed in addition to a direction of travel indicator on the motor vehicle (1) and which is described by a direction of travel indicator signal, and/or a target direction of movement supplied in particular by a navigation system and/or a driver assistance system and/or a direction to a surroundings object (17) situated outside the illumination region (15).

11. Method according to any of the preceding claims,
**characterized**
**in that** the illumination information furthermore describes at least one item of additional information to be displayed by illuminated intervals of the illumination region (15) in the distance direction and the illumination device (2) is furthermore controlled for displaying the additional information, wherein the illumination information additionally describes additional information to be displayed by illuminated intervals of the illumination region (15) in the distance direction.

12. Method according to Claim 11,
**characterized**
**in that** the additional information comprises a parameter which is displayed by way of an extent of an illuminated interval in the distance direction and/or a speed of dynamics of the illumination and/or by way of a light colour and/or a light colour profile in the distance direction, and/or in that the additional information comprises image information which is to be projected onto the ground of the surroundings and which is resolved in accordance with the segmentation.

13. Method according to Claim 11 or 12,
**characterized**
**in that** what is used as the additional information is warning information, in particular with regard to an attempted theft and/or a recognized pedestrian and/or imminent driving off of the motor vehicle (1), and/or reminder information with regard to an action to be performed on the motor vehicle (1) and/or charging information relating to a charging process and/or refuelling process, in particular charging information comprising a state of charge and/or a filling state as parameter(s) and/or charging information indicating a start of charging and/or a completion of charging, and/or emergency information, in particular an extended hazard warning light and/or a panic light, and/or a future planned and/or recommended trajectory of the motor vehicle (1), in particular for realizing a lane merge assistant or lane change assistant.

14. Method according to any of Claims 5 to 13,
**characterized**
**in that** the illumination device (2) is additionally operated for realizing an orientation light function, in particular after arrival or before departure and/or for illuminating a door region, and/or a manoeuvring light function, in particular a reversing light and/or a cornering light, which is to be used in particular when the motor vehicle (1) is reversing.

15. Method according to any of Claims 5 to 14,
**characterized**
**in that** the light intensity of the illuminated illumination segments (16, 16a-f) is selected depending on input information describing the ambient brightness.

## Revendications

1. Véhicule automobile (1), possédant un dispositif d'éclairage (2) qui comporte plusieurs sources lumineuses (4) et un dispositif de commande (8) pour éclairer une zone d'éclairage (15) pouvant être éclairée simultanément et couvrant entièrement l'environnement du véhicule automobile (1) dans la direction circonférentielle, la zone d'éclairage (15) étant divisée, au moyen du dispositif de commande (8) dans le cadre d'au moins une fonction d'éclairage, notamment d'assistance, d'un système de véhicule (9), en segments d'éclairage (16, 16a-f) pouvant être commandés indépendamment pour l'éclairage, la zone d'éclairage (15) du dispositif d'éclairage (2) possédant, dans une direction d'espacement par rapport au véhicule automobile (1), au moins deux segments d'éclairage (16, 16a-f) successifs, la zone d'éclairage (15) étant divisée de manière matricielle en segments d'éclairage (16, 16a-f) successifs dans la direction circonférentielle et dans la direction d'espacement, chaque segment d'éclairage couvrant une zone circonférentielle et une zone d'espacement prédéfinies, **caractérisé en ce**
**que** le dispositif de commande (8), dans le cadre de la fonction d'éclairage, est configuré pour l'affichage dynamique d'une direction d'environnement (18), notamment orientée à l'opposé du véhicule automobile (1) ou vers le véhicule automobile (1), par une commande différente d'au moins deux segments d'éclairage (16, 16a-f) décalés l'un par rapport à l'autre dans la direction d'espacement, de telle sorte que différentes intensités lumineuses et/ou couleurs lumineuses se succèdent dans la direction d'espacement et/ou une dynamique temporelle de type chenillard est utilisé de l'intérieur vers l'extérieur ou de l'extérieur vers l'intérieur.

2. Véhicule automobile (1) selon la revendication 1,
**caractérisé en ce**
**que** la zone d'éclairage (15) présente, dans la direction d'espacement, une étendue d'espacement par rapport au véhicule automobile (1) commençant de 0 à 0,2 m et/ou se terminant de 2,5 à 3,5 m.

3. Véhicule automobile (1) selon l'une des revendications précédentes,
caractérisé en ce
les sources lumineuses (4) comportent au moins une LED et/ou au moins une source de lumière laser et/ou au moins un projecteur et/ou les sources lumineuses (4) sont montées au moins partiellement dans au moins un seuil de portière (6) et/ou une jupe avant (7a) et/ou une jupe arrière (7b) et/ou un bas de caisse et/ou au moins un pare-chocs et/ou dans au moins un passage de roue et/ou dans un becquet et/ou dans une calandre et/ou dans au moins un rétroviseur extérieur et/ou dans au moins une portière et/ou au moins un hayon et/ou en ce que le dispositif d'éclairage (2) est configuré pour éclairer au moins une partie des segments d'éclairage (16, 16a-f) avec différentes intensités lumineuses et/ou couleurs lumineuses.

4. Véhicule automobile (1) selon l'une des revendications précédentes,
**caractérisé en ce**
**que** le dispositif de commande (8), dans le cadre de la fonction d'éclairage, est en outre configuré pour l'éclairage et/ou la mise en évidence d'un objet environnant (17) en fonction de l'espacement et/ou pour l'affichage dynamique d'informations supplémentaires à afficher dans la direction d'espacement par intervalles éclairés de la zone d'éclairage (15).

5. Procédé pour faire fonctionner un dispositif d'éclairage (2) d'un véhicule automobile (1) selon l'une des revendications précédentes, dans le cadre de la fonction d'éclairage du système de véhicule (9), comprenant les étapes suivantes :
- évaluation d'informations d'entrée de la fonction d'éclairage, comprenant notamment des données de capteur d'au moins un capteur d'environnement (10) du véhicule automobile (1), afin de déterminer des informations d'éclairage qui décrivent au moins une direction d'environnement (18) à afficher,
- commande du dispositif d'éclairage (2) conformément aux informations d'éclairage pour éclairer et/ou mettre en évidence l'au moins un objet environnant (17) et/ou afficher l'au moins une direction d'environnement (18), différentes intensités lumineuses et/ou couleurs lumineuses se succédant dans la direction d'espacement et/ou une dynamique temporelle de type chenillard étant utilisé de l'intérieur vers l'extérieur ou de l'extérieur vers l'intérieur.

6. Procédé selon la revendication 5,
**caractérisé en ce**
**que** des informations de commande qui décrivent un motif d'éclairage spatial et/ou temporel sont déterminées en vue de la commande en fonction des informations d'éclairage.

7. Procédé selon la revendication 6,
**caractérisé en ce**
**que** le motif d'éclairage comprend des intensités lumineuses et/ou des couleurs lumineuses qui varient spatialement et/ou temporellement et/ou est extrait au moins partiellement d'une base de données de motifs d'éclairage prédéfinis, en particulier en fonction des informations d'éclairage, et/ou **en ce que** le motif d'éclairage est déterminé au moins partiellement sur la base d'informations de personnalisation fournies par un utilisateur.

8. Procédé selon l'une des revendications 5 à 7,
**caractérisé en ce**
**que** les informations d'éclairage décrivent en outre au moins un objet environnant (17) à éclairer et/ou à mettre en évidence, et le dispositif d'éclairage (2) est en outre commandé pour éclairer et/ou mettre en évidence l'au moins un objet environnant (17), les segments d'éclairage (16, 16a-f) qui contiennent l'au moins un objet environnant (17) étant éclairés de manière plus lumineuse et/ou avec une couleur lumineuse différente de l'environnement d'objet de l'objet environnant (17) en vue d'éclairer et/ou de mettre en évidence celui-ci, et/ou **en ce que**, pour afficher l'au moins une direction d'environnement (18), les segments d'éclairage (16, 16a-f) successifs dans la direction d'environnement (18) plus éloignés sont éclairés différemment des segments d'éclairage (16, 16a-f) adjacents dans la direction circonférentielle et/ou dans la direction d'écartement.

9. Procédé selon la revendication 8,
**caractérisé en ce**
**qu'**une flaque d'eau et/ou un conducteur de véhicule à deux roues étant utilisé comme objet environnant (17), une recommandation de distance étant notamment affichée en plus en tant qu'informations supplémentaires, et/ou un endroit dangereux et/ou un piéton et/ou un dispositif de charge pour un accumulateur d'énergie et/ou un réservoir du véhicule automobile (1) et/ou une zone de dégagement caractérisant une distance latérale à maintenir libre et/ou un endroit sombre éclairé par un lampadaire en dessous d'une valeur de seuil de luminosité et/ou une zone environnante qui se trouve entre le véhicule automobile (1) propre et un véhicule automobile (1) qui se déplace directement devant et/ou derrière, notamment dans le cas d'un déplacement de suivi, et/ou un obstacle et/ou une zone environnante qui se trouve entre l'obstacle et le véhicule automobile (1), en particulier lors d'une opération d'entrée en stationnement et/ou de manœuvre.

10. Procédé selon l'une des revendications 5 à 9,
**caractérisé en ce**
**que** la direction d'environnement (18) utilisée est une direction d'approche d'un objet environnant (17) dynamique et/ou une direction de déplacement actuelle du véhicule automobile (1) propre et/ou une direction d'indicateur de direction de déplacement à afficher en complément d'un indicateur de direction de déplacement au niveau du véhicule automobile (1), décrite par un signal d'indicateur de direction de déplacement et/ou une direction de mouvement voulue notamment fournie par un système de navigation et/ou un système d'assistance au conducteur et/ou une direction vers un objet environnant (17) situé à l'extérieur de la zone d'éclairage (15).

11. Procédé selon l'une des revendications précédentes,
**caractérisé en ce**
**que** les informations d'éclairage décrivent en outre au moins des informations supplémentaires à afficher dans la direction d'espacement par intervalles éclairés de la zone d'éclairage (15) et le dispositif d'éclairage (2) est en outre commandé pour afficher les informations supplémentaires, les informations d'éclairage décrivant en plus des informations supplémentaires à afficher dans la direction d'espacement par des intervalles éclairés de la zone d'éclairage (15).

12. Procédé selon la revendication 11,
**caractérisé en ce**
**que** les informations supplémentaires comprennent un paramètre qui est affiché par le biais d'une étendue d'un intervalle d'éclairage dans la direction d'espacement et/ou une vitesse d'une dynamique de l'éclairage et/ou par le biais d'une couleur lumineuse et/ou d'un profil de couleur lumineuse dans la direction d'espacement, et/ou **en ce que** les informations supplémentaires comprennent des informations d'image à projeter sur l'arrière-plan de l'environnement, résolues en fonction de la segmentation.

13. Procédé selon la revendication 11 ou 12,
**caractérisé en ce**
**que** les informations supplémentaires utilisées sont une information d'avertissement, notamment concernant une tentative de vol et/ou un piéton reconnu et/ou un départ imminent du véhicule automobile (1), et/ou des informations de rappel relatives à une manipulation à effectuer sur le véhicule automobile (1) et/ou des informations de charge relatives à une opération de charge et/ou une opération d'avitaillement, notamment des informations de charge comprenant un état de charge et/ou de remplissage en tant que paramètres et/ou des informations de charge indiquant un début de charge et/ou une fin de charge, et/ou des informations d'urgence, notamment un feu de détresse prolongé et/ou un éclairage antipanique, et/ou une trajectoire future planifiée et/ou recommandée du véhicule automobile (1), en particulier pour la réalisation d'un assistant de regroupement de voies ou un assistant de changement de voie.

14. Procédé selon l'une des revendications 5 à 13,
**caractérisé en ce**
**que** le dispositif d'éclairage (2) est en plus utilisé pour la réalisation d'une fonction d'éclairage d'orientation, en particulier après l'arrivée ou avant le départ et/ou pour l'éclairage d'une zone de portière, et/ou d'une fonction d'éclairage de manœuvre, en particulier d'un feu de recul et/ou d'un feu de virage, à utiliser notamment lors de la marche arrière du véhicule automobile (1).

15. Procédé selon l'une des revendications 5 à 14,
**caractérisé en ce**
**que** l'intensité lumineuse des segments d'éclairage (16, 16a-f) éclairés est sélectionnée en fonction d'informations d'entrée qui décrivent la luminosité ambiante.
